**Europäisches Patentamt**

**European Patent Office**

**Office européen des brevets**

(19)

(11) **EP 1 347 648 A2**

(12) **EUROPEAN PATENT APPLICATION**

| | |
|---|---|
| (43) Date of publication:<br>**24.09.2003 Bulletin 2003/39** | (51) Int Cl.⁷: **H04N 7/26** |

(21) Application number: **02027292.8**

(22) Date of filing: **06.12.2002**

| | |
|---|---|
| (84) Designated Contracting States:<br>**AT BE BG CH CY CZ DE DK EE ES FI FR GB GR IE IT LI LU MC NL PT SE SI SK TR**<br>Designated Extension States:<br>**AL LT LV MK RO** | (71) Applicant: **Monolith Co., Ltd.**<br>**Tokyo 106-0045 (JP)** |
| (30) Priority: **12.03.2002  JP 2002067078** | (72) Inventor: **Hiraga, Masaki**<br>**Minato-ku, Tokyo 106-0045 (JP)**<br><br>(74) Representative: **Pfenning, Meinig & Partner**<br>**Mozartstrasse 17**<br>**80336 München (DE)** |

(54) **Method and apparatus for compressing corresponding point information as image data**

(57)     The matching processor (16) computes image matching between adjacent key frames, and generates the corresponding point information (MF). The form converter (300) converts the corresponding point information (MF) into the image form data. The map image compression unit (302) performs lossy compression of this data by image compression technique.

10 : IMAGE CODING APPARATUS

**Fig.19**

**EP 1 347 648 A2**

**Description**

The present invention relates to image coding and decoding technology, and it particularly relates to the technology of using key frames and corresponding point information between the key frames.

MPEG (Motion Picture Expert Group), the de-facto world standard for the compression of motion pictures, has broaden its target area from mere storage media such as CDs to transmission media such as network or broadcasting. Without compressing and encoding techniques, in the center of which exists the MPEG, digital broadcasting cannot be realized. A barrier that has existed between broadcasting and network communication is now disappearing, so service providers inevitably have to become more diverse. Today, in the broadband age, it is difficult to predict in what way the digital culture will achieve its development.

Even among such the chaotic situation, there is one thing certain about the direction on the compression technology of motion pictures. That is the consistency where both higher compression rate and image quality shall be achieved. It is the well-known fact that block distortion in MPEG is responsible for keeping the compression rate from being improved.

Various respective aspect and features of the invention are defined in the appended claims. Features from the dependent claims may be combined with features of the independent claims as appropriate and not merely as explicitly set out in the claims.

The present invention has been made in view of the foregoing circumstances and an object thereof is to provide a coding and decoding technique by which to realize efficient compression of image data, in particularly, motion picture data. In addition, the use of the technique is not only for the motion pictures in the narrow sense, but for the image effects such as morphing and walkthrough. An embodiment of the present invention relates to an image processing technology. This technology can utilize the image matching technology (hereinafter referred to as the "base technology") which has already proposed in Japanese patent No.2927350, USP 6,018,592 and USP 6,137,910 assigned to the same assignee.

The present invention has been made in view of such the foregoing circumstances, and an object thereof is to provide techniques for coding and decoding, which realizes efficient compression of image data. Another object is to provide the image coding and decoding techniques, which suits an opposite request called maintenance of quality of image, and improvement in compressibility.

Image data processed in the present invention may be motion pictures, or the still pictures, in which three dimensional object are made into two dimension, such as medical images. Namely, the image may change along time, or a spatial axis. State in still another way, all type of arbitrary dimension that can be grasped as a frame can be processed.

A preferred embodiment according to the present invention relates to an image data coding method. This method comprises converting corresponding point information between key frames into image form data, and compressing the data of image form. The converting handles a coordinate value included in corresponding point information as a pixel value, and converts the coordinate value into the image form data. The method further comprises generating the corresponding point information by performing a pixel-by-pixel matching process between key frames.

The "key frame" is referred as the reference frame set as the object for processing of matching and others. The "image form data" means data that can be recognized as two dimensional, and the data has the value that can be handled as a pixel value. Here, the issue is form, not the how it is when it is actually displayed.

As for the corresponding point information, for example, the coordinate data is described to specify the correspondence relation between pixels. Generally, this is text data and can be compressed by the known technique about text data. However, generally, the text data should be compressed lossless, namely reversibly, otherwise when the data is decoded, the data is to be different in its characters from the original. The lossless compression also has a limit in compressibility.

Then, in the present invention, this corresponding point information is once converted into image form, and if necessary, the converted corresponding point information is compressed in lossless or lossy, namely irreversibly by the image compression technique. Compressibility can be improved if lossy compression is used. The key frames may just be compressed separately. The compressibility of a key frame and corresponding point information as a whole is improved by the present invention.

Another embodiment of the present invention relates to an image decoding method. This method comprises decoding corresponding point information between key frames from compressed image form data, and generating the intermediate frame between the key frames by interpolation based on the corresponding point information acquired by the decoding. The data in this image form is generated by handling the coordinate value included in the corresponding point information as a pixel value.

Still another embodiment of the present invention relates to an image coding apparatus. This apparatus comprises a form conversion unit which converts corresponding point information between key frames into image form data; and a compression unit which compresses the image form data.

The form conversion unit may separate two values, x and y, included in a coordinate value, convert corresponding point information into two separate image form data which respectively have the values, x and y, as pixels value, and the compression unit may perform lossy compression of the two separate data individually. The form conversion unit may also connect two values of x and y contained in the coordinate value, and convert the corresponding point information into data in a single image form of pixel values are the connected, and the compression unit may perform lossy compression of the data in a single image.

Still another embodiment of the present invention relates to an image decoding apparatus. This apparatus comprises a decoder which decodes corresponding point information between key frames from compressed image form data; and an intermediate frame generator which generates intermediate frames from the key frames by interpolation on the basis of the corresponding point information which acquired by the decoding.

In the above-described embodiments, the function of generating corresponding point data between key frames and of generating intermediate key frames, are performed on the basis of the base technology. However, this invention needs not necessarily the base technology.

Any arbitrary replacement or substitution of the above-described structural components and processing contents, expressions replaced or substituted in part or whole between a method and an apparatus as well as addition thereof, and processing steps changed to a processing by a computer program, modes of the invention changed to recording media or the like are all effective as and encompassed by the present invention.

The invention will now be described by way of example with reference to accompanying drawings, throughout which like parts are referred to by like references, and in which:

Fig. 1(a) is an image obtained as a result of the application of an averaging filter to a human facial image.

Fig. 1(b) is an image obtained as a result of the application of an averaging filter to another human facial image.

Fig. 1(c) is an image of a human face at $p^{(5,0)}$ obtained in a preferred embodiment in the base technology.

Fig. 1(d) is another image of a human face at $p^{(5,0)}$ obtained in a preferred embodiment in the base technology.

Fig. 1(e) is an image of a human face at $p^{(5,1)}$ obtained in a preferred embodiment in the base technology.

Fig. 1(f) is another image of a human face at $p^{(5,1)}$ obtained in a preferred embodiment in the base technology.

Fig. 1(g) is an image of a human face at $p^{(5,2)}$ obtained in a preferred embodiment in the base technology.

Fig. 1(h) is another image of a human face at $p^{(5,2)}$ obtained in a preferred embodiment in the base technology.

Fig. 1(i) is an image of a human face at $p^{(5,3)}$ obtained in a preferred embodiment in the base technology.

Fig. 1(j) is another image of a human face at $p^{(5,3)}$ obtained in a preferred embodiment in the base technology.

Fig. 2(R) shows an original quadrilateral.

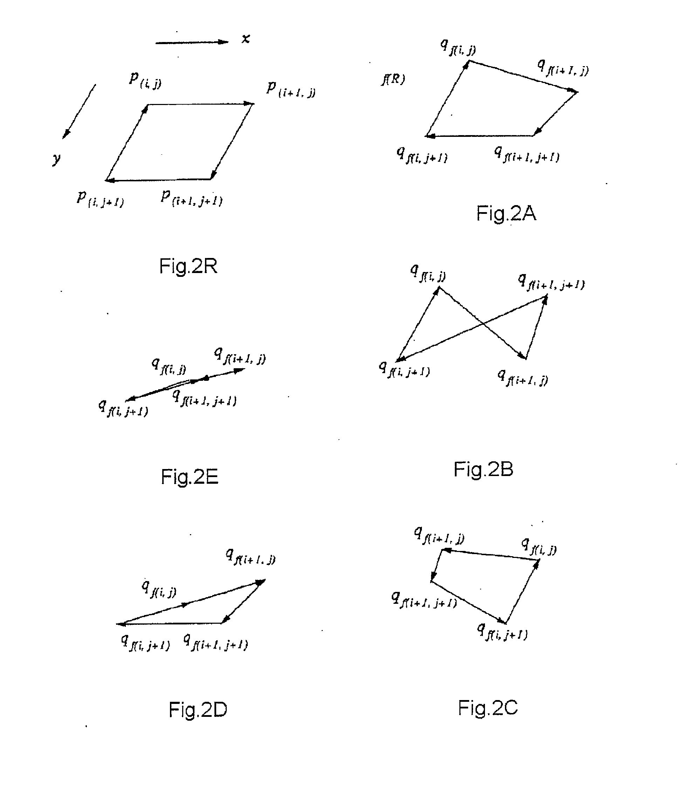

Fig. 2(A) shows an inherited quadrilateral.

Fig. 2(B) shows an inherited quadrilateral.

Fig. 2(C) shows an inherited quadrilateral.

Fig. 2(D) shows an inherited quadrilateral.

Fig. 2(E) shows an inherited quadrilateral.

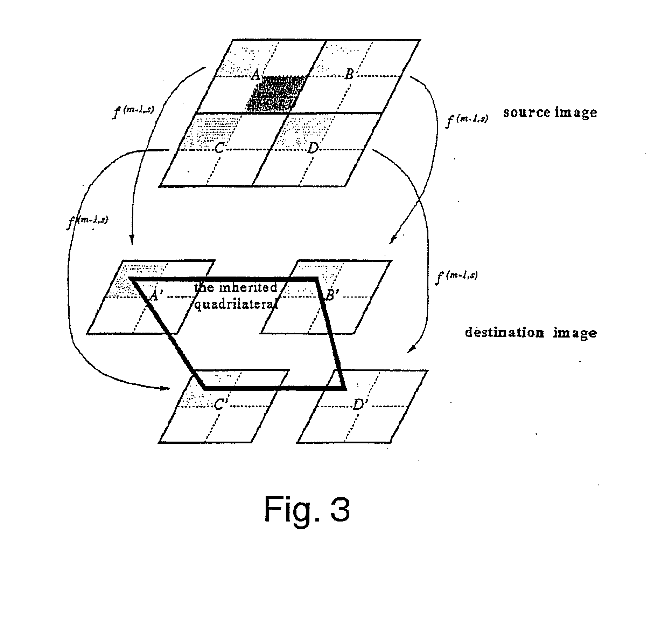

Fig. 3 is a diagram showing the relationship between a source image and a destination image and that between the m-th level and the (m-1)th level, using a quadrilateral.

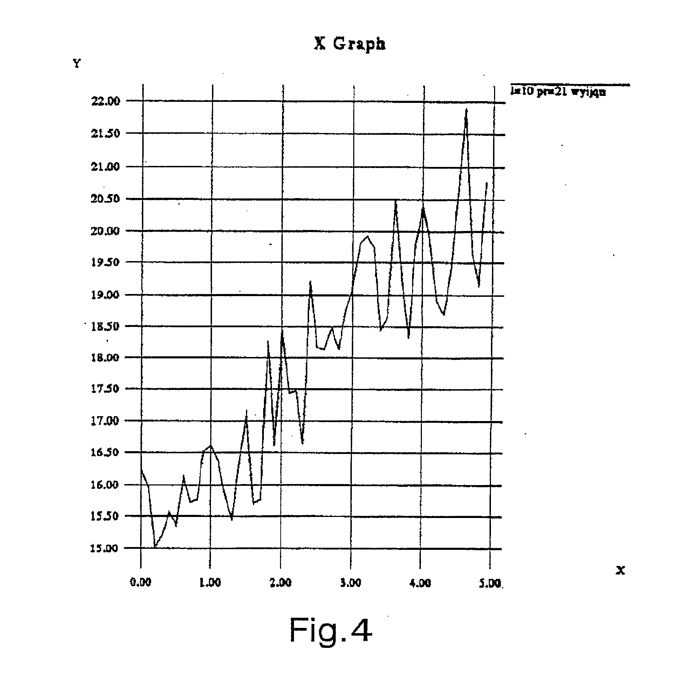

Fig. 4 shows the relationship between a parameter η (represented by x-axis) and energy $C_f$ (represented by y-axis).

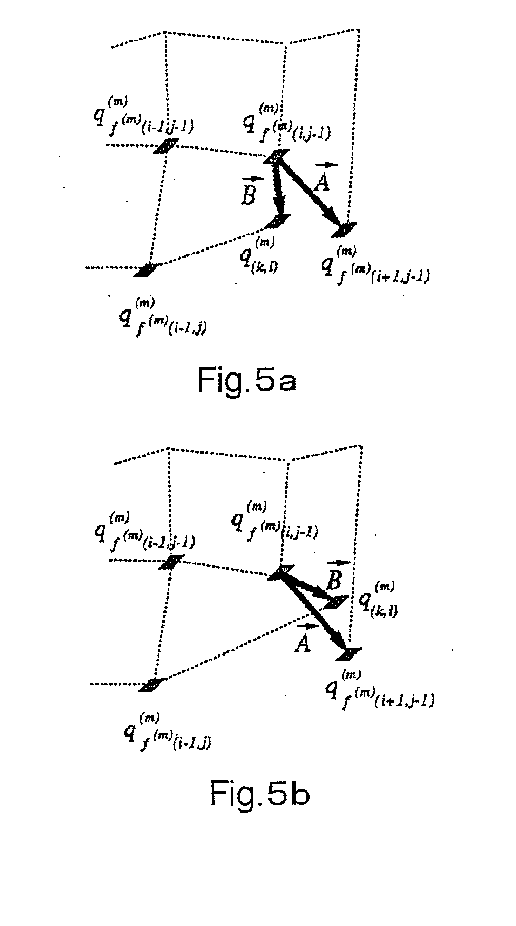

Fig. 5(a) is a diagram illustrating determination of whether or not the mapping for a certain point satisfies the bijectivity condition through the outer product computation.

Fig. 5(b) is a diagram illustrating determination of whether or not the mapping for a certain point satisfies the bijectivity condition through the outer product computation.

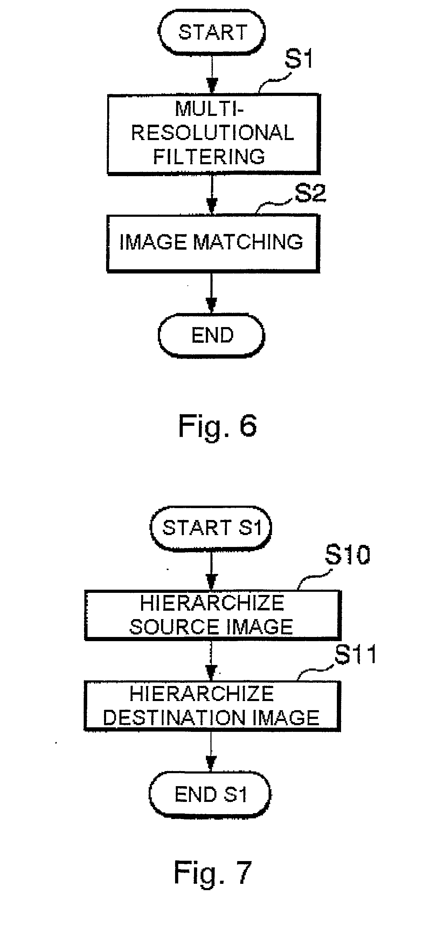

Fig. 6 is a flowchart of the entire procedure of a preferred embodiment in the base technology.

Fig. 7 is a flowchart showing the details of the process at 51 in Fig. 6.

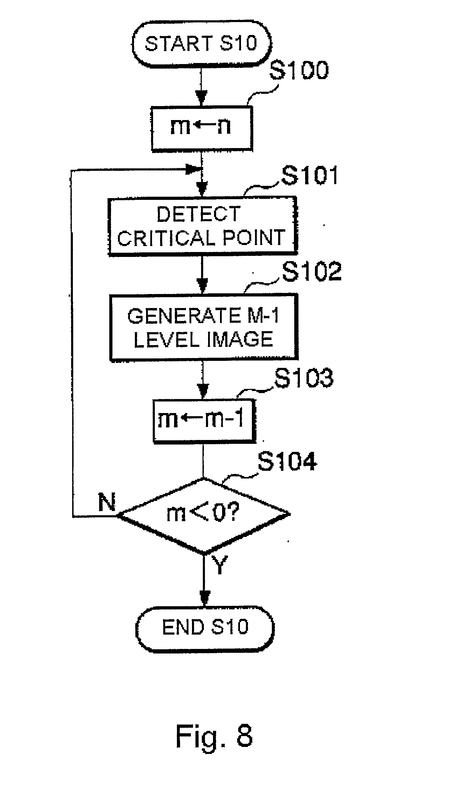

Fig. 8 is a flowchart showing the details of the process at S10 in Fig. 7.

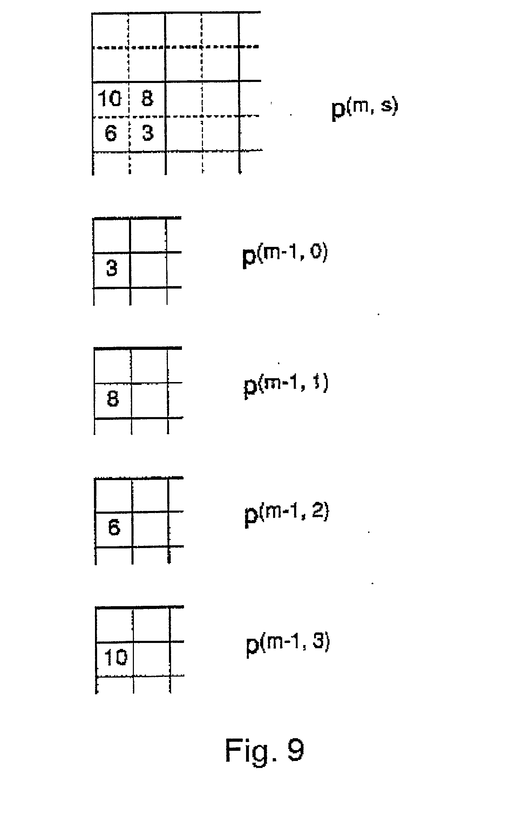

Fig. 9 is a diagram showing correspondence between partial images of the m-th and (m-1)th levels of resolution.

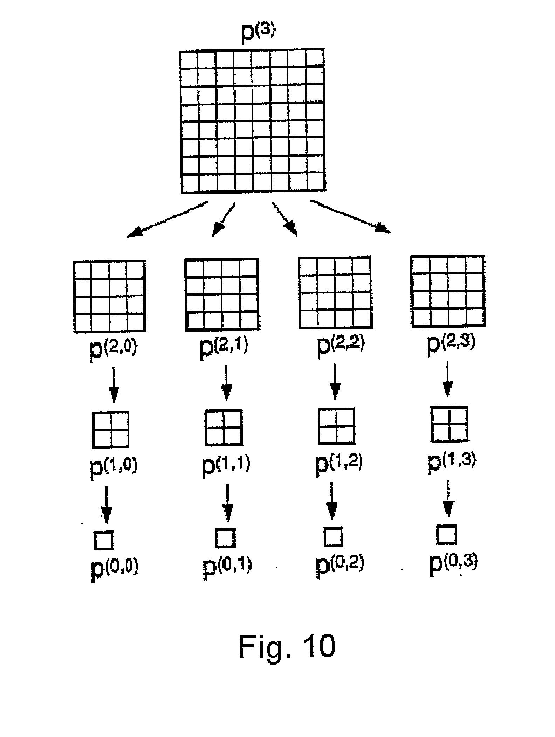

Fig. 10 is a diagram showing source images generated in the embodiment in the base technology.

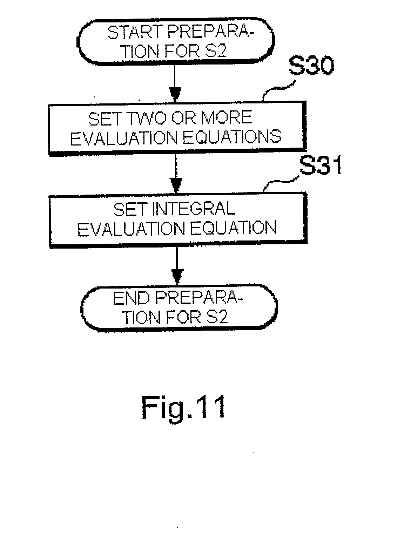

Fig. 11 is a flowchart of a preparation procedure for S2 in Fig. 6.

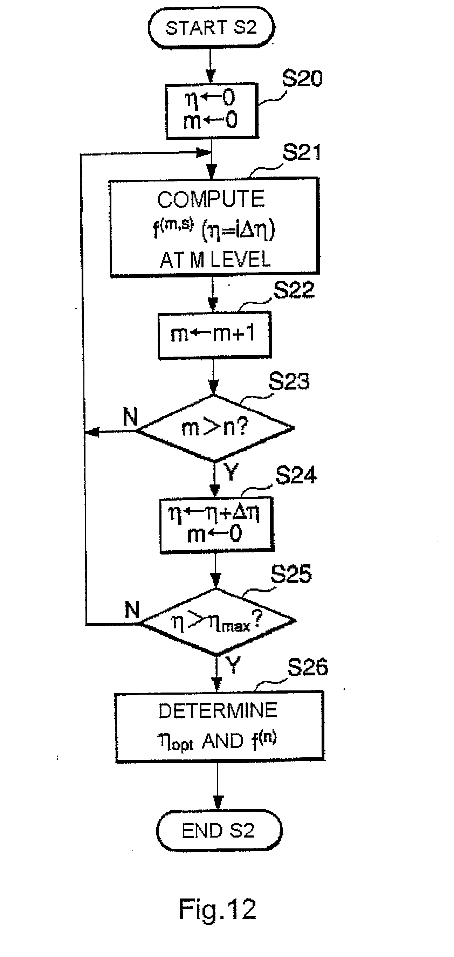

Fig. 12 is a flowchart showing the details of the process at S2 in Fig. 6.

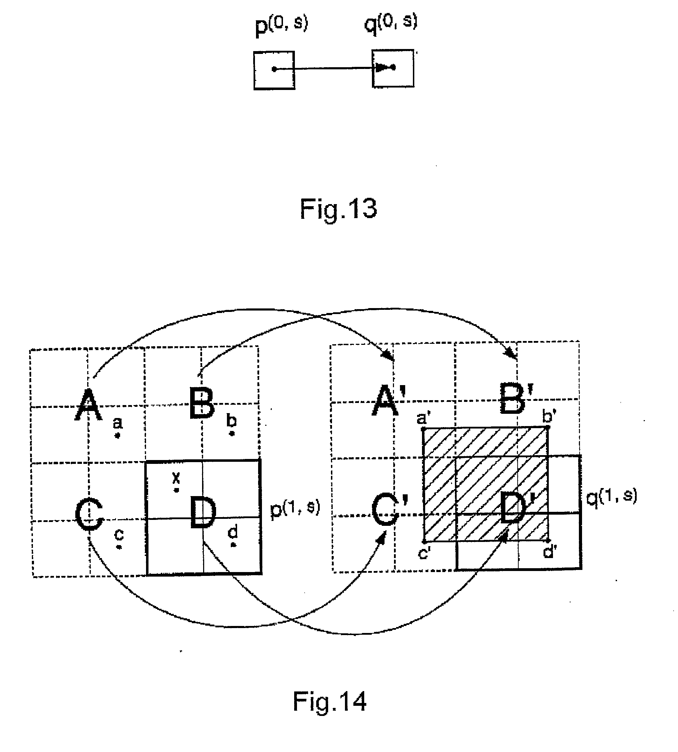

Fig. 13 is a diagram showing the way a submapping is determined at the 0-th level.

Fig. 14 is a diagram showing the way a submapping is determined at the first level.

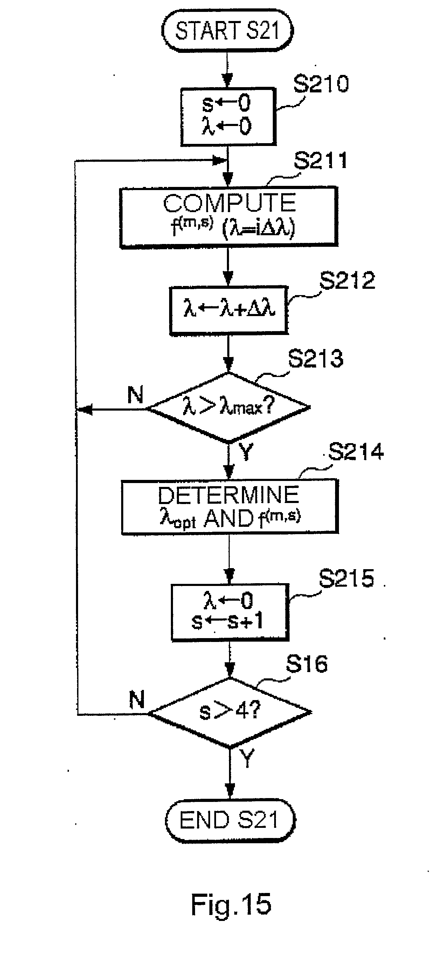

Fig. 15 is a flowchart showing the details of the process at S21 in Fig. 6.

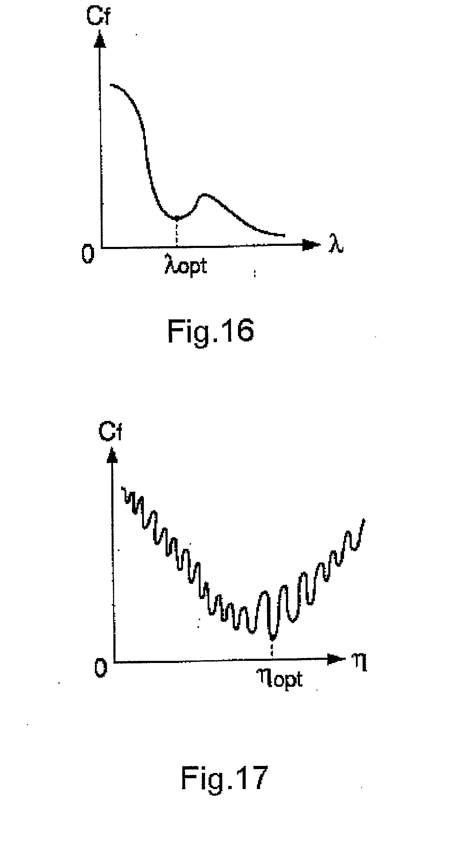

Fig. 16 is a graph showing the behavior of energy $C_f^{(m,s)}$ corresponding to $f^{(m,s)}$ ($\lambda=i\Delta\lambda$) which has been obtained for a certain $f^{(m,s)}$ while changing $\lambda$.

Fig. 17 is a diagram showing the behavior of energy $C_f^{(n)}$ corresponding to $f^{(n)}$ ($\eta=i\Delta\eta$)(i=0,1,...) which has been obtained while changing η.

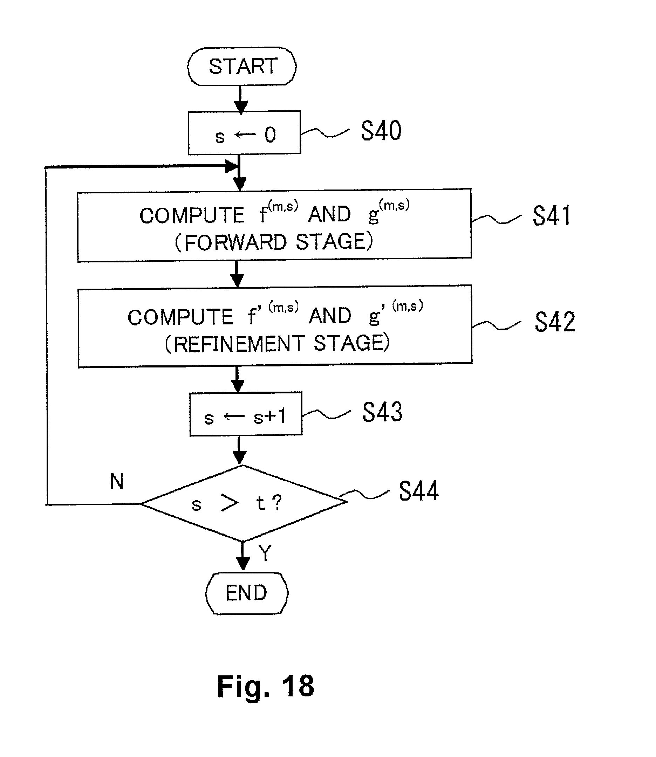

Fig. 18 is a flowchart showing a procedure by which a submapping is obtained at the m-th level in an improved base technology.

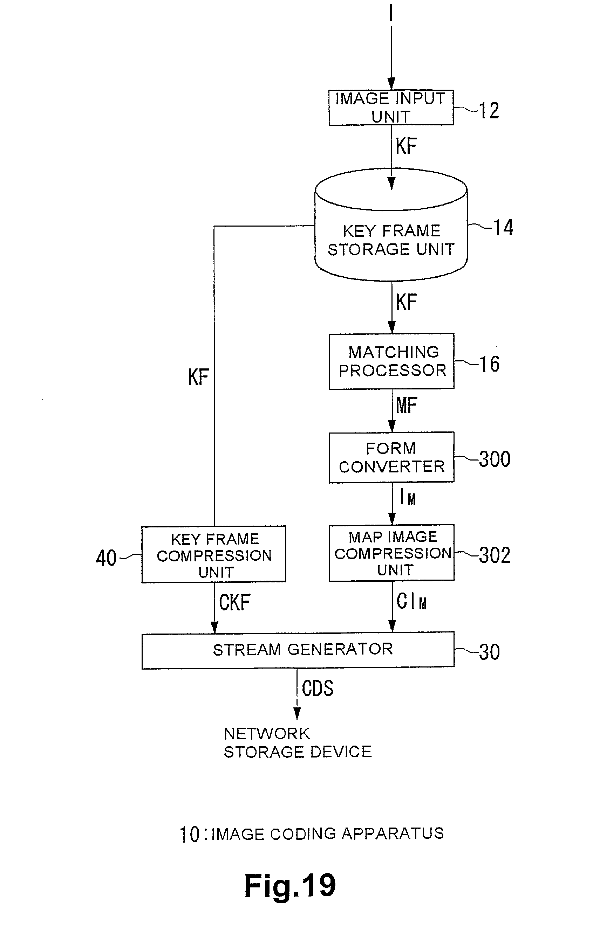

Fig. 19 shows a structure of an image coding apparatus according to the embodiment.

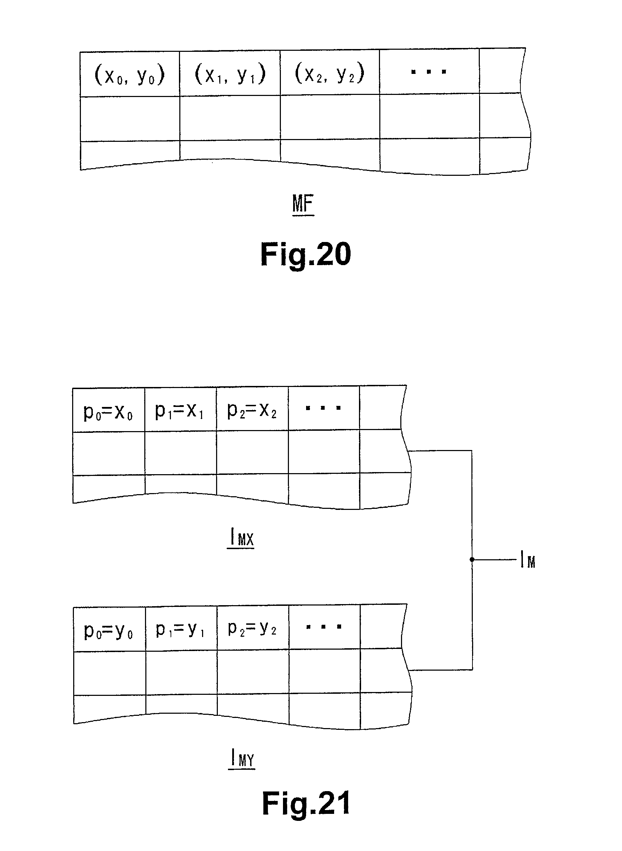

Fig. 20 shows example of composition of the corresponding point information.

Fig. 21 shows example of composition of the corresponding point information that is converted into the image form data by the apparatus in Fig. 19.

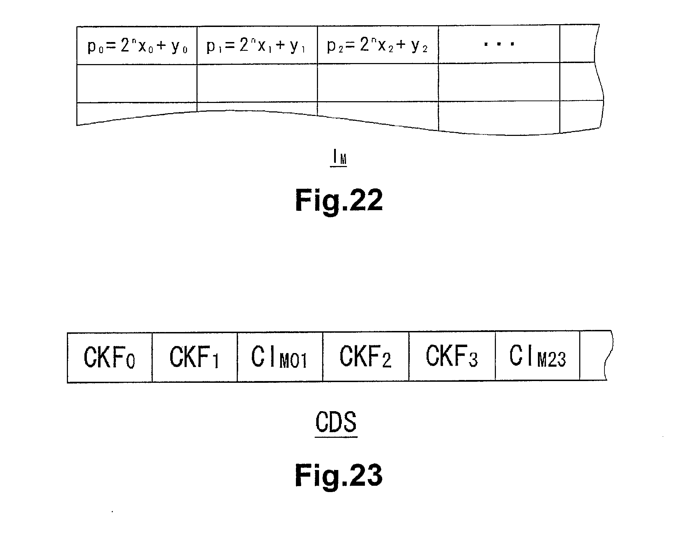

Fig. 22 shows another example of composition of the corresponding point information that is converted into the image form data by the apparatus in Fig. 19.

Fig. 23 is the example of composition of the coded data stream generated by the apparatus in Fig. 19.

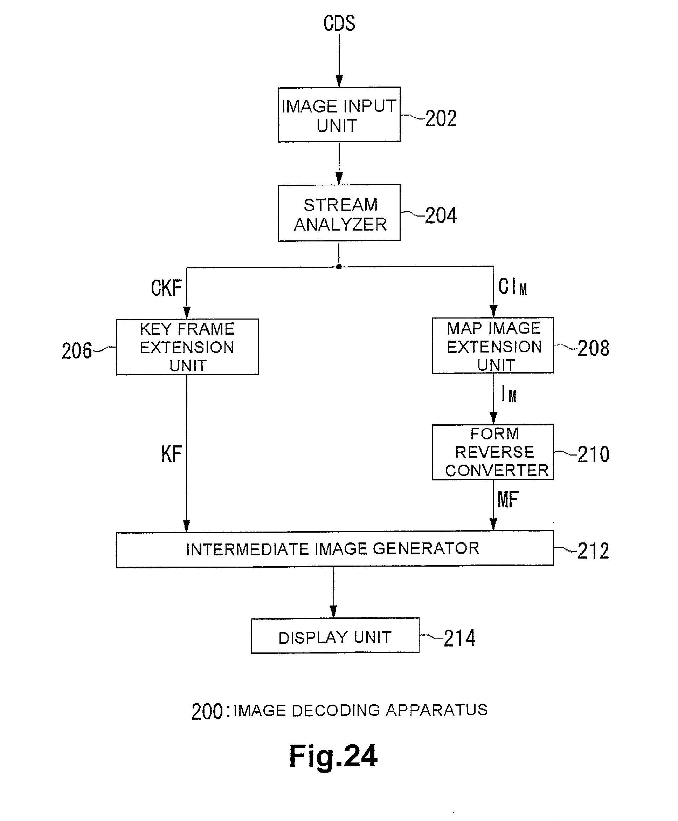

Fig. 24 shows the structure of the image decoding apparatus according to the embodiment.

The invention will now be described based on the preferred embodiments, which do not intend to limit the scope of the present invention, however, exemplify the invention. All of the features and the combinations thereof described in the embodiment are not necessarily essential to the invention.

At first, the multiresolutional critical point filter technology and the image matching processing using the technology, both of which will be utilized in the preferred embodiments, will be described in detail as "Base Technology". Namely, the following sections of [1], [2] and [3] belong to the base technology, where [1] describes elemental techniques [2] describes a processing procedure, and [3] describes an improvement of the technique described in [1] and [2]. These [1] and [2] techniques are patented under Japanese Patent No. 2927350 and owned by the same inventor of the present invention, and they realize an optimal achievement when combined with the present invention. According to the present invention, there is provided a mesh on the image, so that lattice points thereof represent a plurality of pixels. Thus, application efficiency for such the pixel-by-pixel matching technique as in the base technology is naturally high. However, it is to be noted that the image matching techniques which can be adopted in the present embodiments are not limited to this. In Figs. 19 to 20, advertisement displaying techniques utilizing the base technology will be described in a specific manner.

**Base Technology**

[1] Detailed description of elemental techniques

[1.11] Introduction

Using a set of new multiresolutional filters called critical point filters, image matching is accurately computed. There is no need for any prior knowledge concerning objects in question. The matching of the images is computed at each resolution while proceeding through the resolution hierarchy. The resolution hierarchy proceeds from a coarse level to a fine level. Parameters necessary for the computation are set completely automatically by dynamical computation analogous to human visual systems. Thus, There is no need to manually specify the correspondence of points between the images.

The base technology can be applied to, for instance, completely automated morphing, object recognition, stereo photogrammetry, volume rendering, smooth generation of motion images from a small number of frames. When applied to the morphing, given images can be automatically transformed. When applied to the volume rendering, intermediate images between cross sections can be accurately reconstructed, even when the distance between them is rather long and the cross sections vary widely in shape.

[1.2] The hierarchy of the critical point filters

The multiresolutional filters according to the base technology can preserve the intensity and locations of each critical point included in the images while reducing the resolution. Now, let the width of the image be N and the height of the image be M. For simplicity, assume that N=M=2n where n is a positive integer. An interval [0, N] C R is denoted by I. A pixel of the image at position (i, j) is denoted by $p^{(i,j)}$ where i,j . I.

Here, a multiresolutional hierarchy is introduced. Hierarchized image groups are produced by a multiresolutional filter. The multiresolutional filter carries out a two dimensional search on an original image and acquires critical points therefrom. The multiresolutinal filter then extracts the critical points from the original image to construct another image having a lower resolution. Here, the size of each of the respective images of the m-th level is denoted as $2^m \times 2^m$ (0 m n). A critical point filter constructs the following four new hierarchical images recursively, in the direction descending from n.

$$P^{(m,0)}_{(i,j)}= \min(\min(P^{(m+1.0)}_{(2 \; i,2j)},P^{(m+1.0)}_{(2 \; i,2j+1))},)\min(P^{(m+1.0)}_{(2 \; i+1.2j)},P^{(m+1.0)}_{(2 \; i,1.2j+1)}))$$

$$P^{(m,1)}_{(i,j)}= \max(\min(P^{(m+1.1)}_{(2i,2j)},P^{(m+1.1)}_{(2i,j+1)}), \min^{(P^{(m+1.1)}_{(2i+1.2j)})},P^{(m+1.1)}_{(2i+1.2j+1)}))$$

$$P^{(m,2)}_{(i,j)}=\min(\max(P^{(m+1.2)}_{(2i,2j)},P^{(m+1.2)}_{(2i,2j+1)}),\max(P^{(m+1.2)}_{(2i+1.2j)},P^{(m+1.2)}_{(2i+1.2j+1)}))$$

$$P^{(m,3)}_{(i,j)}=\max(\max(P^{(m+1.3)}_{(2i,2j)},P^{(m+1.3)}_{(2i,2j+1)}),\max(P^{(m+1.3)}_{(2i+1.2j)},P^{(m+1.3)}_{(2i+1.2j+1)})) \tag{1}$$

where let

$$P^{(n,0)}_{(i,j)}P^{(n,1)}_{(i,j)} = P^{(n,2)}_{(i,j)} = P^{(n,3)}_{(i,j)} = P_{(i,j)} \tag{2}$$

The above four images are referred to as subimages hereinafter. When $\min_x t x+1$ and $\max_x t x+1$ are abbreviated to and $\alpha$ and $\beta$, respectively, the subimages can be expressed as follows.

$$p^{(m,0)}= \alpha(x)\alpha(y)p^{(m+1,0)}$$

$$p^{(m,1)} = \alpha(x)\beta(y)p^{(m+1,1)}$$

$$p^{(m,2)} = \beta(x)\alpha(y)p^{(m+1,2)}$$

$$p^{(m,2)} = \beta(x)\beta(y)p^{(m+1,3)}$$

Namely, they can be considered analogous to the tensor products of $\alpha$ and $\beta$. The subimages correspond to the respective critical points. As is apparent from the above equations, the critical point filter acquires a critical point of the original image for every block consisting of 2 X 2 pixels. In this acquireion, a point having a maximum pixel value and a point having a minimum pixel value are searched with respect to two directions, namely, vertical and horizontal directions, in each block. Although pixel intensity is used as a pixel value in this base technology, various other values relating to the image may be used. A pixel having the maximum pixel values for the two directions, one having minimum pixel values for the two directions, and one having a minimum pixel value for one direction and a maximum pixel value for the other direction are acquired as a local maximum point, a local minimum point, and a saddle point, respectively.
By using the critical point filter, an image (1 pixel here) of a critical point acquired inside each of the respective blocks serves to represent its block image (4 pixels here). Thus, resolution of the image is reduced. From a singularity theoretical point of view, $\alpha(x) \alpha(y)$ preserves the local minimum point(minima point),$\beta(x)\beta(y)$ preserves the local maximum point(maxima point), $\alpha(x)\beta(y)$ and$\beta(x)\alpha(y)$ preserve the saddle point.
At the beginning, a critical point filtering process is applied separately to a source image and a destination image which are to be matching-computed. Thus, a series of image groups, namely, source hierarchical images and destination hierarchical images are generated. Four source hierarchical images and four destination hierarchical images are generated corresponding to the types of the critical points.
Thereafter, the source hierarchical images and the destination hierarchical images are matched in a series of the resolution levels. First, the minima points are matched using $p^{(m,0)}$. Next, the saddle points are matched using $p^{(m,1)}$ based on the previous matching result for the minima points. Other saddle points are matched using $p^{(m,2)}$. Finally, the maxima points are matched using $p^{(m,3)}$.

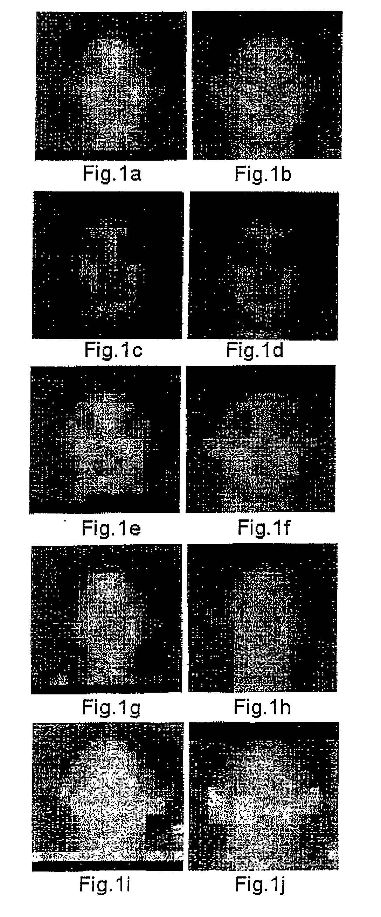

Figs. 1(c) and 1(d) show the subimages $p^{(5,0)}$ of the images in Figs. 1(a) and 1(b), respectively. Similarly, Figs. 1(e) and 1(f) show the subimages $p^{(5,1)}$. Figs. 1(g) and 1(h) show the subimages $p^{(5,2)}$. Figs. 1(i) and 1(j) show the subimages $p^{(5,3)}$. Characteristic parts in the images can be easily matched using subimages. The eyes can be matched by $p^{(5,0)}$ since the eyes are the minima points of pixel intensity in a face. The mouths can be matched by $p^{(5,1)}$ since the mouths have low intensity in the horizontal direction. Vertical lines on the both sides of the necks become clear by $p^{(5,2)}$. The ears and bright parts of cheeks become clear by $p^{(5,3)}$ since these are the maxima points of pixel intensity.
As described above, the characteristics of an image can be extracted by the critical point filter. Thus, by comparing, for example, the characteristics of an image shot by a camera and with the characteristics of several objects recorded in advance, an object shot by the camera can be identified.

[1.3] Computation of mapping between images

The pixel of the source image at the location (i,j) is denoted by $P^{(n)}_{(i,j)}$ and that of the destination image at (k, 1) is denoted by $q^{(n)}_{(k,l)}$ where i, j, k, 1 $\in$ I. The energy of the mapping between the images (described later) is then defined. This energy is determined by the difference in the intensity of the pixel of the source image and its corresponding pixel of the destination image and the smoothness of the mapping. First, the mapping $f^{(m,0)}$ :$p^{(m,0)}$. $q^{(m,0)}$ between $p^{(m,0)}$ and $q^{(m,0)}$ with the minimum energy is computed. Based on $f^{(m,0)}$, the mapping $f^{(m,1)}$ between $p^{(m,1)}$ and $q^{(m,1)}$ with the minimum energy is computed. This process continues until $f^{(m,3)}$ between $p^{(m,3)}$ and $q^{(m,3)}$ is computed. Each $f^{(m,i)}$ (i = 0,1,2,...) is referred to as a submapping. The order of i will be rearranged as shown in the following (3) in computing $f^{(m,i)}$ for the reasons to be described later.

$$f^{(m,i)} : p^{(m,\sigma(i))} \rightarrow q^{(m,\sigma(i))} \tag{3}$$

where $\sigma(i) \in \{0,1,2,3\}$.

[1. 3. 1] Bijectivity

When the matching between a source image and a destination image is expressed by means of a mapping, that mapping shall satisfy the Bijectivity Conditions (BC) between the two images (note that a one-to-one surjective mapping is called a bijection). This is because the respective images should be connected satisfying both surjection and injection, and there is no conceptual supremacy existing between these images. It is to be to be noted that the mappings to be constructed here are the digital version of the bijection. In the base technology, a pixel is specified by a grid point.

The mapping of the source subimage (a subimage of a source image) to the destination subimage (a subimage of a destination image) is represented by $f^{(m,s)}$: I/2^{n-m}X I/2^{n-m}. I/2^{n-m}X I/2^{n-m} (s = 0,1,...), where $f^{(m,s)}_{(i,j)} = (k,l)$ means that $P^{(m,s)}_{(k,l)}$ of the source image is mapped to $q^{(m,s)}_{(k,l)}$ of the destination image. For simplicity, when f(i,j)=(k,1) holds, a pixel q(k,1) is denoted by $q_{f(i,j)}$.

When the data sets are discrete as image pixels (grid points) treated in the base technology, the definition of bijectivity is important. Here, the bijection will be defined in the following.manner, where i,i',j,j',k and 1 are all integers. First, each square region (4)

$$P^{(m,s)}_{(i,j)} P^{(m,s)}_{(i+1,j)} P^{(m,s)}_{(i+1,j+1)} P^{(m,s)}_{(i,j+1)} \tag{4}$$

on the source image plane denoted by R is considered, where i = 0, ..., $2^m$-1, and j = 0, ..., $2^m$-1. The edges of R are directed as follows.

$$\overrightarrow{P^{(m,s)}_{(i,j)} P^{(m,s)}_{(i+1,j)}}, \overrightarrow{P^{(m,s)}_{(i+1,j)} P^{(m,s)}_{(i+1,j+1)}}, \overrightarrow{P^{(m,s)}_{(i+1,j+1)} P^{(m,s)}_{(i,j+1)}} \text{and } \overrightarrow{P^{(m,s)}_{(i,j+1)} P^{(m,s)}_{(i,j)}} \tag{5}$$

This square will be mapped by f to a quadrilateral on the destination image plane. The quadrilateral (6)

$$q^{(m,s)}_{(i,j)} \ q^{(m,s)}_{(i+1,j)} q^{(m,s)}_{(i+1,j+1)} q^{(m,s)}_{(i,j+1)} \tag{6}$$

denoted by $f^{(m,s)}(R)$ should satisfy the following bijectivity conditions(BC). So,

$$(f^{(m,s)}(R) = f^{(m,s)}(P(m,s)(i,j)P(m,s)(i+1,j)P(m,s)(i+1,j+1)P(m,s)(i,j+1)=q^{(m,s)}_{(i,j)}q^{(m,s)}_{(i+1,j+1)}q^{(m,s)}_{(i,j+1)})$$

1. The edges of the quadrilateral $f^{(m,s)}(R)$ should not intersect one another.
2. The orientation of the edges of $f^{(m,s)}(R)$ should be the same as that of R (clockwise in the case of Fig. 2).
3. As a relaxed condition, retraction mapping is allowed.

The bijectivity conditions stated above shall be simply referred to as BC hereinafter.

Without a certain type of a relaxed condition, there would be no mappings which completely satisfy the BC other than a trivial identity mapping. Here, the length of a single edge of $f^{(m,s)}(R)$ may be zero. Namely, $f^{(m,s)}(R)$ may be a triangle. However, it is not allowed to be a point or a line segment having area zero. Specifically speaking, if Fig. 2(R) is the original quadrilateral, Figs. 2(A) and 2(D) satisfy BC while Figs 2(B), 2(C) and 2(E) do not satisfy BC.

In actual implementation, the following condition may be further imposed to easily guarantee that the mapping is surjective. Namely, each pixel on the boundary of the source image is mapped to the pixel that occupies the same locations at the destination image. In other words, f(i,j)=(i,j) (on the four lines of i=0, i=$2^m$-1, j=0, j=$2^m$-1). This condition will be hereinafter referred to as an additional condition.

[1. 3. 2] Energy of mapping

[1. 3. 2. 1] Cost related to the pixel intensity

The energy of the mapping f is defined. An objective here is to search a mapping whose energy becomes minimum. The energy is determined mainly by the difference in the intensity of between the pixel of the source image and its corresponding pixel of the destination image. Namely, the energy $C^{(m,s)}_{(i,j)}$ of the mapping $f^{(m,s)}$ at(i,j) is determined by the following equation (7).

$$C^{(m,s)}_{(i,j)} = |V(P^{(m,s)}_{(i,j)}) - V(Q^{(m,s)}_{(i,j)})|^2 \tag{7}$$

where $V(p^{(m,s)}_{(i,j)})$ and $v(q^{(m,s)}_{f(i,j)})$ are the intensity values of the pixels $P^{(m,s)}_{(i,j)}$ and $q^{(m,s)}_{f(i,j)}$, respectively. The total energy $C^{(m,s)}$ of f is a matching evaluation equation, and can be defined as the sum of $C^{(m,s)}_{(i,j)}$ as shown in the following equation (8).

$$C^{(m,s)}_f = \sum_{i=0}^{i=2^m-1} \sum_{j=0}^{j=2^m-1} C^{(m,s)}_{(i,j)} \quad --- \quad (8)$$

[1. 3. 2. 2] Cost related to the locations of the pixel for smooth mapping

In order to obtain smooth mappings, another energy $D_f$ for the mapping is introduced. The energy $D_f$ is determined by the locations of $p^{(m,s)}_{(i,j)}$ and $q^{(m,s)}_{f(i,j)}$ (i=0,1,...,$2^m$-1, j=0,1,...,$2^m$-1), regardless of the intensity of the pixels. The energy $D^{(m,s)}_{(i,j)}$ of the mapping $f^{(m,s)}$ at a point (i,j) is determined by the following equation (9).

$$D^{(m,s)}_{(i,j)} = \eta E^{(m,s)}_{0(i,j)} + E^{(m,s)}_{1(i,j)} \tag{9}$$

where the coefficient parameter η which is equal to or greater than 0 is a real number. And we have

$$E^{(m,s)}_{0(i,j)} = \|(i,j) - f^{(m,s)}(i,j)\|^2 \tag{10}$$

$$E^{(m,s)}_{1(i,j)} = \sum_{i'=i-1}^{i} \sum_{j'=j-1}^{j} \left\| (f^{(m,s)}(i,j) - (i,j)) - (f^{(m,s)}(i',j') - (i',j')) \right\|^2 / 4 \quad --- \quad (11)$$

where

$$\|(x,y)\| = \sqrt{x^2 + y^2}$$

and f(i',j') is defined to be zero for i'<0 and j'<0. $E_0$ is determined by the distance between (i,j) and f(i,j). $E_0$ prevents a

pixel from being mapped to a pixel too far away from it. However, $E_0$ will be replaced later by another energy function. $E_1$ ensures the smoothness of the mapping. $E_1$ represents a distance between the displacement of p(i,j) and the displacement of its neighboring points. Based on the above consideration, another evaluation equation for evaluating the matching, or the energy $D_f$ is determined by the following equation (13).

$$D_f^{(m,s)} = \sum_{i=0}^{i=2^m-1} \sum_{j=0}^{j=2^m-1} D_{(i,j)}^{(m,s)} \qquad --- \ (13)$$

[1. 3. 2. 31 Total energy of the mapping

The total energy of the mapping, that is, a combined evaluation equation which relates to the combination of a plurality of evaluations, is defined as $\lambda C_{(i,j)}^{(m,s)} + D_f^{(m,s)}$, where $\lambda \geqq 0$ is a real number. The goal is to detect a state in which the combined evaluation equation has an extreme value, namely, to find a mapping which gives the minimum energy expressed by the following (14).

$$\min_f \{\lambda C_f^{(m,s)} + D_f^{(m,s)}\} \qquad (14)$$

Care must be exercised in that the mapping becomes an identity mapping if $\lambda=0$ and $\eta=0$ (i.e., $f^{(m,s)}(i,j)=(i,j)$ for all $i=0,1,...,2^m-1$ and $j=0,1,...,2^m-1$). As will be described later, the mapping can be gradually modified or transformed from an identity mapping since the case of $\lambda=0$ and $\eta=0$ is evaluated at the outset in the base technology. If the combined evaluation equation is defined as $C(m,s)f+\lambda D_f^{(m,s)}$ where the original position of $\lambda$ is changed as such, the equation with $\lambda=0$ and $\eta=0$ will be $C_f^{(m,s)}$ only. As a result thereof, pixels would be randomly corresponded to each other only because their pixel intensities are close, thus making the mapping totally meaningless. Transforming the mapping based on such a meaningless mapping makes no sense. Thus, the coefficient parameter is so determined that the identity mapping is initially selected for the evaluation as the best mapping.

Similar to this base technology, the difference in the pixel intensity and smoothness is considered in the optical flow technique. However, the optical flow technique cannot be used for image transformation since the optical flow technique takes into account only the local movement of an object. Global correspondence can be detected by utilizing the critical point filter according to the base technology.

[1. 3. 3] Determining the mapping with multiresolution

A mapping $f_{min}$ which gives the minimum energy and satisfies the BC is searched by using the multiresolution hierarchy. The mapping between the source subimage and the destination subimage at each level of the resolution is computed. Starting from the top of the resolution hierarchy (i.e., the coarsest level), the mapping is determined at each resolution level, while mappings at other level is being considered. The number of candidate mappings at each level is restricted by using the mappings at an upper (i.e., coarser) level of the hierarchy. More specifically speaking, in the course of determining a mapping at a certain level, the mapping obtained at the coarser level by one is imposed as a sort of constraint conditions.

Now, when the following equation (15) holds,

$$(i', j') = (\left\lfloor \frac{i}{2} \right\rfloor, \left\lfloor \frac{j}{2} \right\rfloor) \qquad --- \ (15)$$

$p_{(i',j')}^{(m-1,s)}$ and $q_{(i',j')}^{(m-1,s)}$ are respectively called the parents of $P_{(i,j)}^{(m,s)}$ and $q_{(i,j)}^{(m,s)}$, where [x] denotes the largest integer not exceeding x. Conversely, $P_{(i,j)}^{(m,s)}$ and $q_{(i,j)}^{(m,s)}$ are the child of $P_{(i',j')}^{(m-1,s)}$ and the child of $q_{(i',j')}^{(m-1,s)}$, respectively. A function parent(i,j) is defined by the following (16).

$$parent(i, j) = (\left\lfloor \frac{i}{2} \right\rfloor, \left\lfloor \frac{j}{2} \right\rfloor) \qquad --- \quad (16)$$

A mapping between $p^{(m,s)}$ and $q^{(m,s)}$ is determined by computing the energy and finding the minimum thereof. The value of f(m,s)(i,j)=(k,1) is determined as follows using f(m-1,s) (m=1,2,...,n). First of all, imposed is a condition that $q^{(m,s)}_{(k,l)}$ should lie inside a quadrilateral defined by the following (17) and (18). Then, the applicable mappings are narrowed down by selecting ones that are thought to be reasonable or natural among them satisfying the BC.

$$q^{(m,s)}_{g^{(m,s)}(i-1,j-1)} \; q^{(m,s)}_{g^{(m,s)}(i-1,j+1)} \; q^{(m,s)}_{g^{(m,s)}(i+1,j+1)} \; q^{(m,s)}_{g^{(m,s)}(i+1,j-1)} \qquad (17)$$

where

$$g^{(m,s)} (i,j) = f^{(m-1,s)} (parent(i, j)) + f^{(m-1,s)} (parent(i, j) + (1,1)) \qquad (18)$$

The quadrilateral defined above is hereinafter referred to as the inherited quadrilateral of $p^{(m,s)}_{(i,j)}$. The pixel minimizing the energy is sought and obtained inside the inherited quadrilateral.

Fig. 3 illustrates the above-described procedures. The pixels A, B, C and D of the source image are mapped to A', B', C' and D' of the destination image, respectively, at the (m-1)th level in the hierarchy. The pixel $p^{(m,s)}_{(i,j)}$ should be mapped to the pixel $q^{(m,s)}_{f^{(m)}(i,j)}$ which exists inside the inherited quadrilateral A'B'C'D'. Thereby, bridging from the mapping at the (m-1)th level to the mapping at the m-th level is achieved.

The energy $E_0$ defined above is now replaced by the following (19) and (20)

$$E_{0(i,j)} = \| f^{(m,0)}(i,j) - g^{(m)}(i,j) \|^2 \qquad (19)$$

$$E_{0(i,j)} = \| f^{(m,s)}(i,j) - f^{(m,s-1)}(i,j) \|^2, (1 \le i) \qquad (20)$$

for computing the submapping f(m,0) and the submapping f(m,s) at the m-th level, respectively.

In this manner, a mapping which keeps low the energy of all the submappings is obtained. Using the equation (20) makes the submappings corresponding to the different critical points associated to each other within the same level in order that the subimages can have high similarity. The equation (19) represents the distance between f(m's) (i, j) and the location where (i,j) should be mapped when regarded as a part of a pixel at the (m-1) the level.

When there is no pixel satisfying the BC inside the inherited quadrilateral A'B'C'D', the following steps are taken. First, pixels whose distance from the boundary of A'B'C'D' is L (at first, L=1) are examined. If a pixel whose energy is the minimum among them satisfies the BC, then this pixel will be selected as a value of f(m,s)(i,j). L is increased until such a pixel is found or L reaches its upper bound $L^{(m)}_{max}$. $L^{(m)}_{max}$ is fixed for each level m. If no such a pixel is found at all, the third condition of the BC is ignored temporarily and such mappings that caused the area of the transformed quadrilateral to become zero (a point or a line) will be permitted so as to determine f(m,s)(i,j). If such a pixel is still not found, then the first and the second conditions of the BC will be removed.

Multiresolution approximation is essential to determining the global correspondence of the images while preventing the mapping from being affected by small details of the images. Without the multiresolution approximation, it is impossible to detect a correspondence between pixels whose distances are large. In the case where the multiresolution approximation is not available, the size of an image will be limited to the very small one, and only tiny changes in the images can be handled. Moreover, imposing smoothness on the mapping usually makes it difficult to find the correspondence of such pixels. That is because the energy of the mapping from one pixel to another pixel which is far therefrom is high. On the other hand, the multiresolution approximation enables finding the approximate correspondence of such pixels. This is because the distance between the pixels is small at the upper (coarser) level of the hierarchy of the resolution.

[1. 4] Automatic determination of the optimal parameter

values

One of the main deficiencies of the existing image matching techniques lies in the difficulty of parameter adjustment. In most cases, the parameter adjustment is performed manually and it is extremely difficult to select the optical value. However, according to the base technology, the optimal parameter values can be obtained completely automatically.

The systems according to this base technology includes two parameters, namely, $\lambda$ and $\eta$, where $\lambda$ and $\eta$ represent the weight of the difference of the pixel intensity and the stiffness of the mapping, respectively. The initial value for these parameters are 0. First, $\lambda$ is gradually increased from $\lambda=0$ while $\eta$ is fixed to 0. As $\lambda$ becomes larger and the value of the combined evaluation equation (equation (14)) is minimized, the value of $C_f^{(m,s)}$ for each submapping generally becomes smaller. This basically means that the two images are matched better. However, if $\lambda$ exceeds the optimal value, the following phenomena (1 - 4) are caused.

1. Pixels which should not be corresponded are erroneously corresponded only because their intensities are close.
2. As a result, correspondence between images becomes inaccurate, and the mapping becomes invalid.
3. As a result, $D_f^{(m,s)}$ in the equation 14 tends to increase abruptly.
4. As a result, since the value of the equation 14 tends to increase abruptly, $f^{(m,s)}$ changes in order to suppress the abrupt increase of $D_f^{(m,s)}$. As a result, $C_f^{(m,s)}$ increases.

Therefore, a threshold value at which $C_f^{(m,s)}$ turns to an increase from a decrease is detected while a state in which the equation (14) takes the minimum value with $\lambda$ being increased is kept. Such $\lambda$ is determined as the optimal value at $\eta=0$. Then, the behavior of $C_f^{(m,s)}$ is examined while $\eta$ is increased gradually, and $\eta$ will be automatically determined by a method described later. $\lambda$ will be determined corresponding to such the automatically determined $\eta$.

The above-described method resembles the focusing mechanism of human visual systems. In the human visual systems, the images of the respective right eye and left eye are matched while moving one eye. When the objects are clearly recognized, the moving eye is fixed.

[1. 4. 1] Dynamic determination of $\lambda$

$\lambda$ is increased from 0 at a certain interval, and the a subimage is evaluated each time the value of $\lambda$ changes. As shown in the equation (14), the total energy is defined by $\lambda C_f^{(m,s)} + D_f^{(m,s)}$. $D_{(i,j)}^{(m,s)}$ in the equation (9) represents the smoothness and theoretically becomes minimum when it is the identity mapping. $E_0$ and $E_1$ increase as the mapping is further distorted. Since $E_1$ is an integer, 1 is the smallest step of $D_f^{(m,s)}$. Thus, that changing the mapping reduces the total energy is impossible unless a changed amount (reduction amount) of the current $\lambda C_{(i,j)}^{(m,s)}$ is equal to or greater than 1. Since $D_f^{(m,s)}$ increases by more than 1 accompanied by the change of the mapping, the total energy is not reduced unless $\lambda C_{(i,j)}^{(m,s)}$ is reduced by more than 1.

Under this condition, it is shown that $C_{(i,j)}^{(m,s)}$ decreases in normal cases as $\lambda$ increases. The histogram of $C_{(i,j)}^{(m,s)}$ is denoted as h(1), where h(1) is the number of pixels whose energy $C_{(i,j)}^{(m,s)}$ is $l^2$. In order that $\lambda l^2 \gtrsim 1$, for example, the case of $l^2=1/\lambda$ is considered. When $\lambda$ varies from $\lambda_1$ to $\lambda_2$, a number of pixels (denoted A) expressed by the following (21)

$$A = \sum_{l=\left\lceil \frac{1}{\lambda_2} \right\rceil}^{\left\lceil \frac{1}{\lambda_1} \right\rceil} h(l) \cong \int_{l=\frac{1}{\lambda_2}}^{\frac{1}{\lambda_1}} h(l)dl = -\int_{\lambda_2}^{\lambda_1} h(l)\frac{1}{\lambda^{3/2}}d\lambda = \int_{\lambda_1}^{\lambda_2}\frac{h(l)}{\lambda^{3/2}}d\lambda \qquad --- \ (21)$$

changes to a more stable state having the energy (22) which is

$$C_f^{(m,s)}C - l^2 = C_f^{(m,s)} - \frac{1}{\lambda} \tag{22}$$

Here, it is assumed that all the energy of these pixels is approximated to be zero. It means that the value of $C_{(i,j)}^{(m,s)}$ changes by (23).

$$\partial C_f^{(m,s)} = -\frac{A}{\lambda} \tag{23}$$

As a result, the equation (24) holds.

$$\frac{\partial C_f^{(m,s)}}{\partial \lambda} = -\frac{h(l)}{\lambda^{5/2}} \tag{24}$$

Since $h(1)>0$, $C_f^{(m,s)}$ decreases in normal case. However, when $\lambda$. tends to exceed the optimal value, the above phenomenon that is characterized by the increase in $C_f^{(m,s)}$ occurs. The optimal value of $\lambda$ is determined by detecting this phenomenon.

When

$$h(l)=Hl^k = \frac{H}{\lambda^{k/2}} \tag{25}$$

is assumed where both $H(h>0)$ and k are constants, the equation (26) holds.

$$\frac{\partial C_f^{(m,s)}}{\partial \lambda} = -\frac{H}{\lambda^{5/2+k/2}} \tag{26}$$

Then, if $k \neq -3$, the following (27) holds.

$$C_f^{(m,s)} = C + \frac{H}{(3/2+k/2)\lambda^{3/2+k/2}} \tag{27}$$

The equation (27) is a general equation of $C_f^{(m,s)}$ (where C is a constant).

When detecting the optimal value of $\lambda$, the number of pixels violating the BC may be examined for safety. In the course of determining a mapping for each pixel, the probability of violating the BC is assumed $p_0$ here. In that case, since

$$\frac{\partial A}{\partial \lambda} = \frac{h(l)}{\lambda^{3/2}} \tag{28}$$

holds, the number of pixels violating the BC increases at a rate of the equation (29).

$$B_0 = \frac{h(l)P_0}{\lambda^{3/2}} \tag{29}$$

Thus,

$$\frac{B_0 \lambda^{3/2}}{P_0 h(l)} = 1 \tag{30}$$

is a constant. If assumed that $h(l)=Hl^k$, the following (31), for example,

$$B_0 \lambda^{3/2+k/2} = P_0 H \tag{31}$$

becomes a constant. However, when $\lambda$ exceeds the optimal value, the above value of (31) increases abruptly. By detecting this phenomenon, whether or not the value of $B_0\lambda^{3/2+k/2}/2^m$ exceeds an abnormal value $B_{0thres}$ exceeds is inspected, so that the optimal value of can be determined. Similarly, whether or not the value of $B_1 \lambda^{3/2+k/2} /2^m$ exceeds an abnormal value $\boldsymbol{B_{1thres}}$, so that the increasing rate $B_1$ of pixels violating the third condition of the BC is checked. The reason why the fact $2^m$ is introduced here will be described at a later stage. This system is not sensitive to the two threshold values $B_{0thres}$ and $B_{1thres}$. The two threshold values $B_{0thres}$ and $B_{1thres}$ can be used to detect the excessive distortion of the mapping which is failed to be detected through the observation of the energy $C^{(m,s)}_f$.

In the experimentation, the computation of $f^{(m,s)}$ is stopped and then the computation of $f^{(m,s+1)}$ is started when $\lambda$ exceeded 0.1. That is because the computation of submappings is affected by the difference of mere 3 out of 255 levels in the pixel intensity when $\lambda > 0.1$, and it is difficult to obtain a correct result when $\lambda > 0.1$.

[1. 4. 2] Histogram h(1)

The examination of $C^{(m,s)}_f$ does not depend on the histogram h(1). The examination of the BC and its third condition may be affected by the h(1). k is usually close to 1 when $(\lambda, C^{(m,s)}_f)$ is actually plotted. In the experiment, k=1 is used, that is, $B_0 \lambda^2$ and $B_1 \lambda^2$ are examined. If the true value of k is less than 1, $B_0 \lambda^2$ and $B_1 \lambda^2$ does not become constants and increase gradually by the factor of $\lambda^{(1-k)/2}$. If h(1) is a constant, the factor is, for example, $\lambda^{1/2}$. However, such a difference can be absorbed by setting the threshold $B_{0thres}$ appropriately.

Let us model the source image by a circular object with its center at $(x_0, y_0)$ and its radius r, given by:

$$p(i, j) = \begin{cases} \dfrac{255}{r} c(\sqrt{(i-x_0)^2 + (j-y_0)^2}) ...(\sqrt{(i-x_0)^2 + (j-y_0)^2} \leq r) \\ 0 ...(otherwise) \end{cases}$$

$$---(32)$$

and the destination image given by:

$$q(i, j) = \begin{cases} \dfrac{255}{r} c(\sqrt{(i-x_1)^2 + (j-y_1)^2}) ...(\sqrt{(i-x_1)^2 + (j-y_1)^2} \leq r) \\ 0 ...(otherwise) \end{cases}$$

$$--- (33)$$

with its center at $(x_1, y_1)$ and radius r. Let c(x) has the form of $c(x)=x^k$. When the centers $(x_0, y_0)$ and $(x_1, y_1)$ are sufficiently far from each other, the histogram h(1) is then in the form of:

$$h(l) \propto rl^k (k \neq 0) \tag{34}$$

When k=1, the images represent objects with clear boundaries embedded in the backgrounds. These objects become darker toward their centers and brighter toward their boundaries. When k=-1, the images represent objects with vague boundaries. These objects are brightest at their centers, and become darker toward boundaries. Without much loss of generality, it suffices to state that objects in general are between these two types of objects. Thus, k such that $-1 \leq k \leq 1$ can cover the most cases, and it is guaranteed that the equation (27) is generally a decreasing function.

As can be observed from the above equation (34), attention must be directed to the fact that r is influenced by the resolution of the image, namely, r is proportional to $2^m$. That is why the factor $2^m$ was introduced in the above section [1.4.1].

[1. 4. 3] Dynamic determination of $\eta$

The parameter $\eta$ can also be automatically determined in the same manner. Initially, $\eta$ is set to zero, and the final mapping $f^{(n)}$ and the energy $C^{(n)}_f$ at the finest resolution are computed. Then, after $\eta$ is increased by a certain value $\Delta\eta$ and the final mapping $f^{(n)}$ and the energy $C^{(n)}_f$ at the finest resolution are again computed. This process is repeated until the optimal value is obtained. $\eta$ represents the stiffness of the mapping because it is a weight of the following equation (35).

$$E_{0(i,j)}^{(m,s)} = \| f^{(m,s)}(i,j) - f^{(m,s-1)}(i,j) \|^2 \tag{35}$$

When $\eta$ is zero, $D_f^{(n)}$ is determined irrespective of the previous submapping, and the present submapping would be elastically deformed and become too distorted. On the other hand, when $\eta$ is a very large value, $D_f^{(n)}$ is almost completely determined by the immediately previous submapping. The submappings are then very stiff, and the pixels are mapped to almost the same locations. The resulting mapping is therefore the identity mapping. When the value of $\eta$ increases from 0, $C_f^{(n)}$ gradually decreases as will be described later. However, when the value of $\eta$ exceeds the optimal value, the energy starts increasing as shown in Fig. 4. In Fig. 4, the x-axis represents $\eta$, and y-axis represents $C_f$.

The optimum value of $\eta$ which minimizes $C_f^{(n)}$ can be obtained in this manner. However, since various elements affects the computation compared to the case of $\lambda$, $C_f^{(n)}$ changes while slightly fluctuating. This difference is caused because a submapping is re-computed once in the case of $\lambda$ whenever an input changes slightly, whereas all the submappings must be re-computed in the case of $\eta$. Thus, whether the obtained value of $C_f^{(n)}$ is the minimum or not cannot be judged instantly. When candidates for the minimum value are found, the true minimum needs to be searched by setting up further finer interval.

[1. 5] Supersampling

When deciding the correspondence between the pixels, the range of $f^{(m,s)}$ can be expanded to R X R (R being the set of real numbers) in order to increase the degree of freedom. In this case, the intensity of the pixels of the destination image is interpolated, so that $f^{(m,s)}$ having the intensity at non-integer points

$$V(q_{f^{(m,s)}(i,j)}^{(m,s)} \tag{36}$$

is provided. Namely, supersampling is performed. In its actual implementation, $f^{(m,s)}$ is allowed to take integer and half integer values, and

$$V(q_{(i,j)+(0.5,0.5)}^{(m,s)}) \tag{37}$$

is given by

$$(V(q_{(i,j)}^{(m,s)}) + V(q_{(i,j)+(1.1)}^{(m,s)}))/2 \tag{38}$$

[1. 6] Normalization of the pixel intensity of each image

When the source and destination images contain quite different objects, the raw pixel intensity may not be used to compute the mapping because a large difference in the pixel intensity causes excessively large energy $C_f^{(m,s)}$ relating the intensity, thus making it difficult to perform the correct evaluation.

[1. 7] Implementation

In the implementation, utilized is a heuristic method where the computation proceeds linearly as the source image is scanned. First, the value of $f^{(m,s)}$ is determined at the top leftmost pixel (i,j)=(0,0). The value of each $f^{(m,s)}(i,j)$ is then determined while i is increased by one at each step. When i reaches the width of the image, j is increased by one and i is reset to zero. Thereafter, $f^{(m,s)}(i,j)$ is determined while scanning the source image. Once pixel correspondence is determined for all the points, it means that a single mapping $f^{(m,s)}$ is determined.

When a corresponding point qf(i,j) is determined for p(i,j), a corresponding point qf(i,j+1) of P(i,j+1) is determined next. The position of qf(i,j+1) is constrained by the position of qf(i,j) since the position of qf(i,j+1) satisfies the BC. Thus, in this system, a point whose corresponding point is determined earlier is given higher priority. If the situation continues in which (0,0) is always given the highest priority, the final mapping might be unnecessarily biased. In order to avoid this bias, $f^{(m,s)}$ is determined in the following manner in the base technology.

First, when (s mod 4) is 0, $f^{(m,s)}$ is determined starting from (0,0) while gradually increasing both i and j. When (s mod 4) is 1, it is determined starting from the top rightmost location while decreasing i and increasing j. When (s mod 4) is 2, it is determined starting from the bottom rightmost location while decreasing both i and j. When (s mod 4) is 3, it is determined starting from the bottom leftmost location while increasing i and decreasing j. Since a concept such as the submapping, that is, a parameter s, does not exist in the finest n-th level, $f^{(m,s)}$ is computed continuously in two directions on the assumption that s=0 and s=2.

In the actual implementation, the values of $f^{(m,s)}(i,j)$ (m=0,...,n) that satisfy the BC are chosen as much as possible, from the candidates (k,1) by awarding a penalty to the candidates violating the BC. The energy $D_{(k,1)}$ of the candidate that violates the third condition of the BC is multiplied by Ø and that of a candidate that violates the first or second condition of the BC is multiplied by ψ. In the actual implementation, $\phi=2$ and $\psi=100000$ are used.

In order to check the above-mentioned BC, the following test is performed as the actual procedure when determining $(k,1)=f^{(m,s)}(i,j)$. Namely, for each grid point (k,1) in the inherited quadrilateral of $f^{(m,s)}(i,j)$, whether or not the z-component of the outer product of

$$W=\vec{A}\times\vec{B} \tag{39}$$

is equal to or greater than 0 is examined, where

$$\vec{A}=\overrightarrow{q^{(m,s)}_{f_{(m;s)(i,j-1)}}q^{(m,s)}_{f(m,s)(i+1,j-1)}} \tag{40}$$

$$\vec{B} = \overrightarrow{q^{(m,s)}_{f(m,s)(i,j-1)}q^{(m,s)}_{(k,l)}} \tag{41}$$

Here, the vectors are regarded as 3D vectors and the z-axis is defined in the orthogonal right-hand coordinate system. When W is negative, the candidate is awarded a penalty by multiplying $D^{(m,s)}_{(k,l)}$ by ψ so as not to be selected as much as possible.

Figs. 5(a) and 5(b) illustrate the reason why this condition is inspected. Fig. 5(a) shows a candidate without a penalty and Fig. 5(b) shows one with a penalty. When determining the mapping $f^{(m,s)}(i,j+1)$ for the adjacent pixel at (i,j+1), there is no pixel on the source image plane that satisfies the BC if the z-component of W is negative because then $q^{(m,s)}_{(k,l)}$ passes the boundary of the adjacent quadrilateral.

[1. 7. 1] The order of submappings

In the actual implementation, (7(0)=0, σ(1)=1, σ(2)=2, σ(3)=3, σ(4)=0 were used when the resolution level was even, while σ(0)=3, σ(1)=2, σ(2)=1, σ(3)=0, σ(4)=3 were used when the resolution level was odd. Thus, the submappings are shuffled in an approximately manner. It is to be noted that the submapping is primarily of four types, and s may be any one among 0 to 3. However, a processing with s=4 was actually performed for the reason described later.

[1. 8] Interpolations

After the mapping between the source and destination images is determined, the intensity values of the corresponding pixels are interpolated. In the implementation, trilinear interpolation is used. Suppose that a square P(i,j) P(i+1,j)P(i+1,j+1)P(i,j+1) on the source image plane is mapped to a quadrilateral $q_f(i,j)q_f(i+1,j)q_f(i+1,j+i)q_f(i,j+1)$ on the destination image plane. For simplicity, the distance between the image planes is assumed 1. The intermediate image pixels r(x,y,t) (0≦x≦N-1, 0≦y≦M-1) whose distance from the source image plane is t (0≦t≦1) are obtained as follows. First, the location of the pixel r(x,y,t), where x,y,t∈R, is determined by the equation (42).

$$\begin{aligned}(x, y) = &(1 - dx)(1 - dy)(1 - t)(i, j) + (1 - dx)(1 - dy)tf(i, j)\\ &+ dx(1 - dy)(1 - t)(i+1, j) + dx(1 - dy)tf(i+1, j)\\ &+ (1 - dx)dy(1 - t)(i, j+1) + (1 - dx)dytf(i, j+1)\\ &+ dxdy(1 - t)(i+1, j+1) + dxdytf(i+1, j+1)\end{aligned} \quad --- \quad (42)$$

The value of the pixel intensity at r(x,y,t) is then determined by the equation (43).

$$V(r(x,y,t)) = (1-dx)(1-dy)(1-t)V(p_{(i,j)}) + (1-dx)(1-dy)tV(q_{f(i,j)})$$
$$+ dx(1-dy)(1-t)V(p_{(i+1,j)}) + dx(1-dy)tV(q_{f(i+1,j)})$$
$$+ (1-dx)dy(1-t)V(p_{(i,j+1)}) + (1-dx)dytV(q_{f(i,j+1)})$$
$$+ dxdy(1-t)V(p_{(i+1,j+1)}) + dxdytV(q_{f(i+1,j+1)})$$

$$\qquad\qquad\qquad --- \quad (43)$$

where dx and dy are parameters varying from 0 to 1.

[1. 9] Mapping to which constraints are imposed

So far, the determination of the mapping to which no constraint is imposed has been described. However, when a correspondence between particular pixels of the source and destination images is provided in a predetermined manner, the mapping can be determined using such correspondence as a constraint.

The basic idea is that the source image is roughly deformed by an approximate mapping which maps the specified pixels of the source image to the specified pixels of the destination images and thereafter a mapping f is accurately computed.

First, the specified pixels of the source image are mapped to the specified pixels of the destination image, then the approximate mapping that maps other pixels of the source image to appropriate locations are determined. In other words, the mapping is such that pixels in the vicinity of the specified pixels are mapped to the locations near the position to which the specified one is mapped. Here, the approximate mapping at the m-th level in the resolution hierarchy is denoted by $F^{(m)}$.

The approximate mapping F is determined in the following manner. First, the mapping for several pixels are specified. When $n_s$ pixels

$$P(i_0,j_0),P(i_i,j_i),...,P(i_{n_s}-1, j_{n_s}-1) \qquad\qquad (44)$$

of the source image are specified, the following values in the equation (45) are determined.

$$F^{(n)}(i_0, j_0) = (k_0, l_0),$$
$$F^{(n)}(i_1, j_1) = (k_1, l_1),..., \qquad --- \quad (45)$$
$$F^{(n)}(i_{n_s-1}, j_{n_s-1}) = (k_{n_s-1}, l_{n_s-1})$$

For the remaining pixels of the source image, the amount of displacement is the weighted average of the displacement of $p(i_h,j_h)$ (h=0,..., $n_s$ -1). Namely, a pixel $P_{(i,j)}$ is mapped to the following pixel (expressed by the equation (46)) of the destination image.

$$F^{(m)}(i, j) = \frac{(i, j) + \sum_{h=0}^{h=n_s-1}(k_h - i_h, l_h - j_h)weight_h(i, j)}{2^{n-m}} \qquad --- \quad (46)$$

where

$$weight_h(i,j)= \frac{1/\|(i_h\text{-}i,j_h\text{-}j\|^2}{total\_weight(i,j)} \qquad (47)$$

where

$$total\_weight(i,j) = \sum_{h=0}^{h=n_x-1} 1/\|(i_h - i, j_h - j)\|^2 \quad --- \quad (48)$$

Second, the energy $D^{(m,s)}$ of the candidate mapping f is changed so that mapping f similar to $F^{(m)}$ has a lower energy. Precisely speaking, $D^{(m,s)}_{(i,j)}$ is expressed by the equation (49).

$$D^{(m,s)}_{(i,j)}=E^{(m,s)}_{0_{(i,j)}}+\eta E^{(m,s)}_{1(i,j)}+\kappa E^{(m,s)}_{2(i,j)} \qquad (49)$$

$$E^{(m,s)}_{2_{(i,j)}} = \begin{cases} 0, & if \left\|F^{(m)}(i,j) - f^{(m,s)}(i,j)\right\|^2 \leq \left\lfloor \dfrac{\rho^2}{2^{2(n-m)}} \right\rfloor \\ \left\|F^{(m)}(i,j) - f^{(m,s)}(i,j)\right\|^2, & otherwise \end{cases} \quad --- \quad (50)$$

where $K, \rho \geq 0$. Finally, the mapping f is completely determined by the above-described automatic computing process of mappings.

Note that $E^{(m,s)}_{2_{(i,j)}}$ becomes 0 if $f^{(m,s)}(i,j)$ is sufficiently close to $F^{(m)}(i,j)$ i.e., the distance therebetween is equal to or less than

$$\left\lfloor \frac{\rho^2}{2^{2(n-m)}} \right\rfloor \qquad --- \quad (51)$$

It is defined so because it is desirable to determine each value $f^{(m,s)}(i,j)$ automatically to fit in an appropriate place n the destination image as long as each value $f^{(m,s)}(i,j)$ is close to $F^{(m)}(i,j)$ For this reason, there is no need to specify the precise correspondence in detail, and the source image is automatically mapped so that the source image matches the destination image.

[2] Concrete Processing Procedure

The flow of the process utilizing the respective elemental techniques described in [1] will be described.
Fig. 6 is a flowchart of the entire procedure of the base technology. Referring to Fig. 6, a processing using a multiresolutional critical point filter is first performed (S1). A source image and a destination image are then matched (S2). S2 is not indispensable, and other processings such as image recognition may be performed instead, based on the characteristics of the image obtained at S1.
Fig. 7 is a flowchart showing the details of the process at S1 shown in Fig. 6. This process is performed on the assumption that a source image and a destination image are matched at S2. Thus, a source image is first hierarchized using a critical point filter (S10) so as to obtain a series of source hierarchical images. Then, a destination image is hierarchized in the similar manner (S11) so as to obtain a series of destination hierarchical images. The order of S10 and S11 in the flow is arbitrary, and the source image and the destination image can be generated in parallel.
Fig. 8 is a flowchart showing the details of the process at S10 shown in Fig. 7. Suppose that the size of the original source image is $2^n X 2^n$. Since source hierarchical images are sequentially generated from one with a finer resolution to one with a coarser resolution, the parameter m which indicates the level of resolution to be processed is set to n (S100). Then, critical points are detected from the images $p^{(m,0)}$, $p^{(m,1)}$ $p^{(m,2)}$ and $p^{(m,3)}$ of the m-th level of resolution, using a critical point filter (S101), so that the images $p^{(m-1,0)}$, $p^{(m-1,1)}$, $p^{(m-1,2)}$ and $p^{(m-1,3)}$ of the (m-1)th level are generated (S102). Since m=n here, $p^{(m,0)} = p^{(m,1)} = p^{(m,2)} = p^{(m,3)} = p^{(n)}$ holds and four types of subimages are thus generated from a single source image.

Fig. 9 shows correspondence between partial images of the m-th and those of (m-1)th levels of resolution. Referring to Fig. 9, respective values represent the intensity of respective pixels. $p^{(m,s)}$ symbolizes four images p(m, 0) through $p^{(m'3)}$, and when generating $p^{(m-1,0)}$ $p^{(m,s)}$ is regarded as $p^{(m,0)}$. For example, as for the block shown in Fig. 9, comprising four pixels with their pixel intensity values indicated inside, images $p^{(m-1,0)}, p^{(m-1,1)} p^{(m-1,2)}$ and $p^{(m-1,3)}$ acquire "3", "8", "6" and "10", respectively, according to the rules described in [1.2]. This block at the m-th level is replaced at the (m-1)th level by respective single pixels acquired thus. Therefore, the size of the subimages at the (m-1)th level is $2^{m-1} \times 2^{m-1}$.

After m is decremented (S103 in Fig. 8), it is ensured that m is not negative (S104). Thereafter, the process returns to S101, so that subimages of the next level of resolution, i.e., a next coarser level, are generated. The above process is repeated until subimages at m=0 (0-th level) are generated to complete the process at S10. The size of the subimages at the 0-th level is 1 X 1.

Fig. 10 shows source hierarchical images generated at S10 in the case of n=3. The initial source image is the only image common to the four series followed. The four types of subimages are generated independently, depending on the type of a critical point. Note that the process in Fig. 8 is common to S11 shown in Fig. 7, and that destination hierarchical images are generated through the similar procedure. Then, the process by S1 shown in Fig. 6 is completed.

In the base technology, in order to proceed to S2 shown in Fig. 6 a matching evaluation is prepared. Fig. 11 shows the preparation procedure. Referring to Fig. 11, a plurality of evaluation equations are set (S30). Such the evaluation equations include the energy $C^{(m,s)}_f$ concerning a pixel value, introduced in [1.3.2.1], and the energy $D^{(m,s)}_f$ concerning the smoothness of the mapping introduced in [1.3.2.2]. Next, by combining these evaluation equations, a combined evaluation equation is set (S31). Such the combined evaluation equation includes $\lambda C^{(m,s)}_{(i,j)} + D^{(m,s)}_f$. Using $\eta$ introduced in [1.3.2.2], we have

$$\sum\sum (\lambda C^{(m,s)}_{(i,j)} + \eta E^{(m,s)}_{0(i,j)} + E^{(m,s)}_{1(i,j)}) \qquad (52)$$

In the equation (52) the sum is taken for each i and j where i and j run through 0, 1,... , $2^{m-1}$. Now, the preparation for matching evaluation is completed.

Fig. 12 is a flowchart showing the details of the process of S2 shown in Fig. 6. As described in [1], the source hierarchical images and destination hierarchical images are matched between images having the same level of resolution. In order to detect global corresponding correctly, a matching is calculated in sequence from a coarse level to a fine level of resolution. Since the source and destination hierarchical images are generated by use of the critical point filter, the location and intensity of critical points are clearly stored even at a coarse level. Thus, the result of the global matching is far superior to the conventional method.

Referring to Fig. 12, a coefficient parameter $\eta$ and a level parameter m are set to 0 (S20). Then, a matching is computed between respective four subimages at the m-th level of the source hierarchical images and those of the destination hierarchical images at the m-th level, so that four types of submappings $f^{(m,s)}$ (s=0, 1, 2, 3) which satisfy the BC and minimize the energy are obtained (S21). The BC is checked by using the inherited quadrilateral described in [1.3.3]. In that case, the submappings at the m-th level are constrained by those at the (m-1)th level, as indicated by the equations (17) and (18). Thus, the matching computed at a coarser level of resolution is used in subsequent calculation of a matching. This is a vertical reference between different levels. If m=0, there is no coarser level and the process, but this exceptional process will be described using Fig. 13.

On the other hand, a horizontal reference within the same level is also performed. As indicated by the equation (20) in [1.3.3], $f^{(m,3)}$, $f^{(m,2)}$ and $f^{(m,1)}$ are respectively determined so as to be analogous to $f^{(m,2)}$, $f^{(m,1)}$ and $f^{(m,0)}$. This is because a situation in which the submappings are totally different seems unnatural even though the type of critical points differs so long as the critical points are originally included in the same source and destination images. As can been seen from the equation (20), the closer the submappings are to each other, the smaller the energy becomes, so that the matching is then considered more satisfactory.

As for $f^{(m,0)}$, which is to be initially determined, a coarser level by one is referred to since there is no other submapping at the same level to be referred to as shown in the equation (19). In the experiment, however, a procedure is adopted such that after the submappings were obtained up to $f^{(m,3)}$, $f^{(m,0)}$ is renewed once utilizing the thus obtained subamppings as a constraint. This procedure is equivalent to a process in which s=4 is substituted into the equation (20) and $f^{(m,4)}$ is set to $f^{(m,0)}$ anew. The above process is employed to avoid the tendency in which the degree of association between $f^{(m,0)}$ and $f^{(m,3)}$ becomes too low. This scheme actually produced a preferable result. In addition to this scheme, the submappings are shuffled in the experiment as described in [1.7.1], so as to closely maintain the degrees of association among submappings which are originally determined independently for each type of critical point. Furthermore, in order to prevent the tendency of being dependent on the starting point in the process, the location thereof is changed according to the value of s as described in [1.7].

Fig. 13 illustrates how the submapping is determined at the 0-th level. Since at the 0-th level each sub-image is consitituted by a single pixel, the four submappings $f^{(0,s)}$ is automatically chosen as the identity mapping. Fig. 14 shows how the submappings are determined at the first level. At the first level, each of the sub-images is constituted of four pixels, which are indicated by a solid line. When a corresponding point (pixel) of the point (pixel) x in $p^{(1's)}$ is searched within $q^{(1,s)}$, the following procedure is adopted.

1. An upper left point a, an upper right point b, a lower left point c and a lower right point d with respect to the point x are obtained at the first level of resolution.

2. Pixels to which the points a to d belong at a coarser level by one, i.e., the 0-th level, are searched. In Fig. 14, the points a to d belong to the pixels A to D, respectively. However, the points A to C are virtual pixels which do not exist in reality.

3. The corresponding points A' to D' of the pixels A to D, which have already been defined at the 0-th level, are plotted in $q^{(1,s)}$. The pixels A' to C' are virtual pixels and regarded to be located at the same positions as the pixels A to C.

4. The corresponding point a' to the point a in the pixel A is regarded as being located inside the pixel A', and the point a' is plotted. Then, it is assumed that the position occupied by the point a in the pixel A (in this case, positioned at the upper right) is the same as the position occupied by the point a' in the pixel A'.

5. The corresponding points b' to d' are plotted by using the same method as the above 4 so as to produce an inherited quadrilateral defined by the points a' to d'.

6. The corresponding point x' of the point x is searched such that the energy becomes minimum in the inherited quadrilateral. Candidate corresponding points x' may be limited to the pixels, for instance, whose centers are included in the inherited quadrilateral. In the case shown in Fig. 14, the four pixels all become candidates.

The above described is a procedure for determining the corresponding point of a given point x. The same processing is performed on all other points so as to determine the submappings. As the inherited quadrilateral is expected to become deformed at the upper levels (higher than the second level), the pixels A' to D' will be positioned apart from one another as shown in Fig. 3.

Once the four submappings at the m-th level are determined in this manner, m is incremented (S22 in Fig. 12). Then, when it is confirmed that m does not exceed n (S23), return to S21. Thereafter, every time the process returns to S21, submappings at a finer level of resolution are obtained until the process finally returns to S21 at which time the mapping $f^{(n)}$ at the n-th level is determined. This mapping is denoted as $f^{(n)}(\eta=0)$ because it has been determined relative to $\eta=0$.

Next, to obtain the mapping with respect to other different $\eta$, $\eta$ is shifted by $\Delta\eta$ and m is reset to zero (S24). After confirming that new $\eta$ does not exceed a predetermined search-stop value $\eta_{max}$(S25), the process returns to S21 and the mapping $f^{(n)}$ $(\eta=\Delta\eta)$ relative to the new $\eta$ is obtained. This process is repeated while obtaining $f^{(n)}(\eta = i\Delta\eta)$ (i=0,1,...) at S21. When $\eta$ exceeds $\eta_{max}$, the process proceeds to S26 and the optimal $\eta =\eta_{opt}$ is determined using a method described later, so as to let $f^{(n)}(\eta=\eta_{opt})$ be the final mapping $f^{(n)}$.

Fig. 15 is a flowchart showing the details of the process of S21 shown in Fig. 12. According to this flowchart, the submappings at the m-th level are determined for a certain predetermined $\eta$. When determining the mappings, the optimal $\lambda$. is defined independently for each submapping in the base technology.

Referring to Fig. 15, s and $\lambda$ are first reset to zero (S210). Then, obtained is the submapping $f^{(m's)}$ that minimizes the energy with respect to the then $\lambda$ (and, implicitly, $\eta$) (S211), and the thus obtained is denoted as $f^{(m,s)}(\lambda=0)$. In order to obtain the mapping with respect to other different $\lambda$, $\lambda$ is shifted by $\Delta\lambda$. After confirming that new $\lambda$ does not exceed a predetermined search-stop value $\lambda_{max}$ (S213), the process returns to S211 and the mapping $f^{(m,s)}$ $(\lambda=\Delta\lambda)$ relative to the new $\lambda$ is obtained. This process is repeated while obtaining $f^{(m,s)}(\lambda = i\Delta\lambda)$ (i = 0,1,...). When $\lambda$ exceeds $\lambda_{max}$, the process proceeds to S214 and the optimal $\lambda=\lambda_{opt}$ is determined , so as to let $f^{(n)}(\lambda=\lambda opt)$ be the final mapping $f^{(m,s)}$ (S214).

Next, in order to obtain other submappings at the same level, $\lambda$ is reset to zero and s is incremented (S215). After confirming that s does not exceed 4 (S216), return to S211. When s=4, $f^{(m'0)}$ is renewed utilizing $f^{(m,3)}$ as described above and a submapping at that level is determined.

Fig. 16 shows the behavior of the energy $C_f^{(m,s)}$ corresponding to $f^{(m,s)}$ ($\lambda = i\Delta\lambda$) (i=0,1,...) for a certain m and s while varying $\lambda$. Though described in [1.4], as $\lambda$ increases, $C_f^{(m,s)})$ normally decreases but changes to increase after $\lambda$ exceeds the optimal value. In this base technology, $\lambda$ in which $C_f^{(m,s)}$ becomes the minima is defined as $\lambda_{opt}$. As observed in Fig. 16, even if $C_f^{(m,s)}$ turns to decrease again in the range $\lambda>\lambda_{opt}$ , the mapping will be spoiled by then and becomes meaningless. For this reason, it suffices to pay attention to the first occurring minima value. $\lambda_{opt}$ is independently determined for each submapping including $f^{(n)}$.

Fig. 17 shows the behavior of the energy $C_f^{(n)}$ corresponding to $f^{(n)}(\eta = i\Delta\eta)$ (i=0,1,...) while varying $\eta$. Here too, $C_f^{(n)}$ normally decreases as $\eta$ increases, but $C_f^{(n)}$ changes to increase after $\eta$ exceeds the optimal value. Thus, $\eta$ in which $C_f^{(n)}$ becomes the minima is defined as $\eta_{opt}$. Fig. 17 can be considered as an enlarged graph around zero along the horizontal axis shown in Fig. 4. Once $\eta_{opt}$ is determined, $f^{(n)}$ can be finally determined.

As described above, this base technology provides various merits. First, since there is no need to detect edges, problems in connection with the conventional techniques of the edge detection type are solved. Furthermore, prior knowledge about objects included in an image is not necessitated, thus automatic detection of corresponding points is achieved. Using the critical point filter, it is possible to preserve intensity and locations of critical points even at a coarse level of resolution, thus being extremely advantageous when applied to the object recognition, characteristic extraction, and image matching. As a result, it is possible to construct an image processing system which significantly reduces manual labors.

Some extensions to or modifications of the above-described base technology may be made as follows:

(1) Parameters are automatically determined when the matching is computed between the source and destination hierarchical images in the base technology. This method can be applied not only to the calculation of the matching between the hierarchical images but also to computing the matching between two images in general.

For instance, an energy $E_0$ relative to a difference in the intensity of pixels and an energy $E_1$ relative to a positional displacement of pixels between two images may be used as evaluation equations, and a linear sum of these equations, i.e., $E_{tot}=\alpha E_0+E_1$, may be used as a combined evaluation equation. While paying attention to the neighborhood of the extrema in this combined evaluation equation, $\alpha$ is automatically determined. Namely, mappings which minimize $E_{tot}$ are obtained for various $\alpha$'s. Among such mappings, $\alpha$ at which $E_{tot}$ takes the minimum value is defined as an optimal parameter. The mapping corresponding to this parameter is finally regarded as the optimal mapping between the two images.

Many other methods are available in the course of setting up evaluation equations. For instance, a term which becomes larger as the evaluation result becomes more favorable, such as $1/E_1$ and $1/E_2$, may be employed. A combined evaluation equation is not necessarily a linear sum, but an n-powered sum (n=2, 1/2, -1, -2, etc.), a polynomial or an arbitrary function may be employed when appropriate.

The system may employ a single parameter such as the above $\alpha$, two parameters such as $\eta$ and $\lambda$ in the base technology or more than two parameters. When there are more than three parameters used, they are determined while changing one at a time.

(2) In the base technology, a parameter is determined in such a manner that a point at which the evaluation equation $C_f^{(m,s)}$ constituting the combined evaluation equation takes the minima is detected after the mapping such that the value of the combined evaluation equation becomes minimum is determined. However, instead of this two-step processing, a parameter may be effectively determined, as the case may be, in a manner such that the minimum value of a combined evaluation equation becomes minimum. In that case, $\alpha E_0+\beta E_1$, for instance, may be taken up as the combined evaluation equation, where $\alpha+\beta=1$ is imposed as a constraint so as to equally treat each evaluation equation. The essence of automatic determination of a parameter boils down to determining the parameter such that the energy becomes minimum.

(3) In the base technology, four types of submappings related to four types of critical points are generated at each level of resolution. However, one, two, or three types among the four types may be selectively used. For instance, if there exists only one bright point in an image, generation of hierarchical images based solely on $f^{(m,3)}$ related to a maxima point can be effective to a certain degree. In this case, no other submapping is necessary at the same level, thus the amount of computation relative on s is effectively reduced.

(4) In the base technology, as the level of resolution of an image advances by one through a critical point filter, the number of pixels becomes 1/4. However, it is possible to suppose that one block consists of 3X3 pixels and critical points are searched in this 3X3 block, then the number of pixels will be 1/9 as the level advances by one.

(5) When the source and the destination images are color images, they are first converted to monochrome images, and the mappings are then computed. The source color images are then transformed by using the mappings thus obtained as a result thereof. As one of other methods, the submappings may be computed regarding each RGB component.

[3] Improvements in the base technology

The base technology above may also be further refined or improved to yield more precise matching. Some improvements are hereinafter described.

[3.1] Critical point filters and subimages considering color information

The critical point filters of the base technology may be revised to make effective use of the color information in the images. First, a color space is introduced using HIS (hue, intensity, saturation), which is considered to be closest to human intuition. However, a formula for intensity "Y" which is considered closest to human visual sensitivity is used instead of "I", for the transformation of color into intensity.

$$H = \frac{\frac{\pi}{2} - \tan^{-1}\left(\frac{2R - G - R}{\sqrt{3(G-B)}}\right)}{2\pi}$$

$$I = \frac{R+G+B}{3}$$

$$S = 1 - \frac{\min(R,G,B)}{3}$$

$$Y = 0.299 \times R + 0.587 \times G + 0.114 \times B \tag{53}$$

Here, the following definitions are made, in which the intensity Y and the saturation S at a pixel "a" are respectively denoted by Y(a) and S(a).

$$\alpha_Y(a,b) = \begin{cases} a \cdots (Y(a) \leq Y(b)) \\ b \cdots (Y(a) > Y(b)) \end{cases}$$

$$\beta_Y(a,b) = \begin{cases} a \cdots (Y(a) \geq Y(b)) \\ b \cdots (Y(a) < Y(b)) \end{cases}$$

$$\beta_S(a,b) = \begin{cases} a \cdots (S(a) \geq S(b)) \\ b \cdots (S(a) < S(b)) \end{cases}$$

$$--- \tag{54}$$

The following five filters are then prepared based on the definition described above.

$$P_{(i,j)}^{(m,0)} = \beta_y\left(\beta_y(p_{(2i,2j)}^{(m+1.0)}, p_{(2i,2j+1)}^{(m+1.0)}), \beta_y(p_{(2i+1.2j)}^{(m+1.0)}, p_{(2i+1.2j+1)}^{(m+1.0)})\right) \tag{55}$$

$$P_{(i,j)}^{(m,1)} = \alpha y\left(\beta y(p_{(2i,2j)}^{(m+1.1)}, p_{(2i,2j+1)}^{(m+1.1)}), \beta y(p_{(2i+1.2j)}^{(m+1.1)}, p_{(2i+1.2j+1)}^{(m+1.1)})\right)$$

$$P_{(i,j)}^{(m,2)} = \beta y\left(\alpha y(p_{(2i,2j)}^{(m+1.2)}, p_{(2i,2j+1)}^{(m+1.2)}), \alpha y(p_{(2i+1.2j)}^{(m+1.2)}, p_{(2i+1.2j+1)}^{(m+1.2)})\right)$$

$$P_{(i,j)}^{(m,3)} = \alpha y\left(\alpha y(p_{(2i,2j)}^{(m+1.3)}, p_{(2i,2j+1)}^{(m+1.3)}) \alpha y(p_{(2i+1.2j)}^{(m+1.3)}, p_{(2i,1.2j+1)}^{(m+1.3)})\right)$$

$$p_{(i,j)}^{(m,4)} = \beta s\left(\beta s(\beta s(p_{(2i,2j)}^{(m+1.4)}, p_{(2i,2j+1)}^{(m+1.4)}), \beta s(p_{(2i+1.2j)}^{(m+1.4)}, p_{(2i+1.2j+1)}^{(m+1.4)})\right) \tag{55}$$

The top four filters in (55) are almost the same as those in the base technology, and accordingly, critical points of intensity are preserved with color information. The last filter preserves critical points of saturation, also together with the color information.

At each level of resolution, five types of subimage are generated by these filters. Note that the subimages at the highest level are consistent with the original image.

$$p_{(i,j)}^{(n,0)} = p_{(i,j)}^{(n,1)} = p_{(i,j)}^{(n,2)} = p_{(i,j)}^{(n,3)} = p_{(i,j)}^{(n,4)} = p_{(i,j)} \tag{56}$$

[3.2] Edge images and subimages

An edge detection filter using the first order derivative is further introduced to incorporate information related to edges for matching. This filter can be obtained by convolution integral with a given operator G. The following 2 filters related to horizontal and vertical derivative for an image at n-th level are described as follows:

$$p_{(i,j)}^{(n,h)} = Y(p_{(i,j)}) \otimes G_h$$
$$p_{(i,j)}^{(n,v)} = Y(p_{(i,j)}) \otimes G_v \tag{57}$$

Although G may be a typical operator used for edge detection in image analysis, the following was used in consideration of the computing speed, in this improved technology.

$$G_h = \frac{1}{4}\begin{bmatrix} 1 & 0 & -1 \\ 2 & 0 & -2 \\ 1 & 0 & -1 \end{bmatrix}$$

$$G_v = \frac{1}{4}\begin{bmatrix} 1 & 2 & 1 \\ 0 & 0 & 0 \\ -1 & -2 & -1 \end{bmatrix} \tag{58}$$

Next, the image is transformed into the multiresolution hierarchy. Because the image generated by the edge detection filter has an intensity with a center value of 0, the most suitable subimages are the mean value images as follows:

$$p_{(i,j)}^{(m,h)} = \frac{1}{4}(p_{(2i,2j)}^{(m+1,h)} + p_{(2i,2j+1)}^{(m+1,h)} + p_{(2i+1,2j)}^{(m+1,h)} + p_{(2i+1,2j+1)}^{(m+1,h)})$$
$$p_{(i,j)}^{(m,v)} = \frac{1}{4}(p_{(2i,2j)}^{(m+1,v)} + p_{(2i,2j+1)}^{(m+1,v)} + p_{(2i+1,2j)}^{(m+1,v)} + p_{(2i+1,2j+1)}^{(m+1,v)}) \tag{59}$$

$p_{(i,j)}^{(m,k)} = \frac{1}{4}$ The images described in equation (59) are introduced to the energy concerning the edge difference in the energy function for computation during the "forward stage", the stage in which an initial submapping is derived, as will hereinafter be described in more detail.

The magnitude of the edge, i.e., the absolute value is also necessary for the calculation. It is denoted as follows:

$$p_{(i,j)}^{(n,e)} = \sqrt{(P_{(i,j)}^{(n,h)})^2 + p_{(i,j)}^{(n,v)})^2} \tag{60}$$

Because this value will always be positive, a maximum value filter can be used for the transformation into the multiresolutional hierarchy.

$$p_{(i,f)}^{(m,e)} = \beta_Y \ (\beta_Y \ (p_{(2i,2j)}^{(m+1,e)}, \ p_{(2i+2j+1)}^{(m+1,e)}), \ \beta_Y \ (p_{(2i+1.2j+1)}^{(m+1,e)}, \ p_{(2i+1.2j+1)}^{(m+1,e)})) \tag{61}$$

The image described in equation (61) is introduced in the course of determining the order of the calculation in the "forward stage" described below.

[3.31 Computing procedures

The computing proceeds in order from the subimages with the coarsest resolution. The calculations are performed more than once at each level of the resolution due to the five types of subimages. This is referred to as a "turn", and the maximum number of turns is denoted by t. Each turn includes energy minimization calculations both in a "forward stage" mentioned above, and in a "refinement stage", that is, a stage in which the submapping is recomputed based on the result of the forward stage. Fig. 18 shows a flowchart related to the improved technology illustrating the computation of the submapping at the m-th level.

As shown in the figure, s is set to zero (S40) initially. Then the mapping $f^{(m's)}$ of the source image to the destination image, and the mapping $g^{(m's)}$ of the destination image to the source image are respectively computed by energy minimization in the forward stage (S41). The computation for $f^{(m,s)}$ is hereinafter described. The energy minimized in this improvement technology is the sum of the energy C, concerning the value of the corresponding pixels, and the energy D, concerning the smoothness of the mapping.

$$\min_f (C^f(i,j) + D^f(i,j)) \quad --- \ (62)$$

In this improved technology, the energy C includes the energy $C_I$ concerning the intensity difference, which is the same as the energy C in the base technology described in sections [1] and [2] above, the energy $C_c$ concerning the hue and the saturation, and the energy $C_E$ concerning the edge difference. These energies are described as follows:

$$C_I^f(i,j) = |Y(p_{(i,j)}^{(m,s)}) - Y(q_{f(t,j)}^{(m,s)})|^2$$

$$C_C^f(i,j) = |S(p_{(i,j)}^{(m,s)} \cos(2\pi H(p_{(i,j)}^{(m,s)})) - S(q_{f(i,j)}^{(m,s)}) \cos(2\pi H(q_{f(i,j)}^{(m,s)}))|^2 + |S(p_{(i,j)}^{(m,s)}) \sin(2\pi H(p_{(i,j)}^{(m,s)})) - S(q_{f(i,j)}^{(m,s)}) \sin(2\pi H(q_{f(i,j)}^{(m,s)}))|^2$$

$$C_E^f(i,j) = |p_{(i,j)}^{(m,h)} - q_{f(i,j)}^{(m,h)}|^2 + |p_{(i,j)}^{(m,v)} - q_{f(i,j)}^{(m,v)}|^2$$

$$C^f(i,j) = \lambda C_I^f(i,j) + \Psi C_C^f(i,j) + \theta C_E^f(i,j) \tag{63}$$

The parameters ë, Ø, and è are real numbers more than 0, and they have constant values in this improved technology. This constancy was achieved by the refinement stage introduced in this technology, which leads to more stable calculation result. Energy $C_E$ is determined from the coordinate (i,j) and the resolution level m, and independent of the type of mapping $f^{(m,s)}$ "s".

The energy D is similar to that in the base technology described above. However, in the base technology, only the adjacent pixels are taken into account when the energy $E_1$, which deals with the smoothness of the images, is derived, whereas, in this improved technology, the number of ambient pixels taken into account can be set as a parameter d.

$$E_0^f(i, j) = \left\| f(i, j) - (i, j) \right\|^2$$

$$E_1^f(i, j) = \sum_{i'=i-d}^{i+d} \sum_{j'=j-d}^{j+d} \left\| \left( f(i, j) - (i, j) \right) - \left( f(i', j') - (i', j') \right) \right\|^2 \quad \text{---} \quad (64)$$

In preparation for the refinement stage, the mapping $g^{(m,s)}$ of the destination image q to the source image p is also computed in the forward stage.

In the refinement stage (S42), a more appropriate mapping $f'^{(m,s)}$ is computed based on the bidirectional mappings, $f^{(m,s)}$ and $g^{(m,s)}$, which were previously computed in the forward stage. In this refinement stage, an energy minimization calculation for an energy M is performed. The energy M is the sum of the energy $M_0$, concerning the degree of conformation to the mapping g of the destination image to the source image, and the energy $M_1$, concerning the difference from the initial mapping. Then, obtained is the submapping $f'^{(m,s)}$ that minimizes the energy M.

$$M_0^{f'}(i,j) = \left\| g(f'(i,j)) - (i,j) \right\|^2$$

$$M_1^{f'}(i,j) = \left\| f'(i, j) - f(i,j) \right\|^2$$

$$M^{f'}(i,j) = M_0^{f'}(i,j) + M_1^{f'}(i,j) \tag{65}$$

The mapping $g'^{(m,s)}$ of the destination image q to the source image p is also computed in the same manner, so as not to distort in order to maintain the symmetry.

Thereafter, s is incremented (S43), and if s does not exceed t (S44), the computation proceeds to the forward stage in the next turn (S41). In so doing, the energy minimization calculation is performed using a substituted $E_0$, which is described as follows:

$$E_0^f(i,j) = \left\| f(i,j) - f'(i,j) \right\|^2 \tag{66}$$

[3.4] Order of mapping calculation

Because the energy concerning the mapping smoothness, $E_1$, is computed using the mappings of the ambient points, the energy depends on whether those points are previously computed or not. Therefore, the total mapping preciseness significantly depends on the point from which the computing starts and the order in which points are processed. In order to overcome this concern, an image having an absolute value of edge (see equation (61)) is introduced. Because the edge generally has a large amount of information, the mapping calculation proceeds from a point at which the absolute value of edge is the largest. This technique about the order of mapping calculation can make the mapping extremely precise, in particular, for binary images and the like.

[Coding and decoding]

The example of an image coding and an image decoding using a part of the base technology will be described.

Fig. 19 shows a structure of an image coding apparatus 10 according to an embodiment. The image coding apparatus 10 includes an image input unit 12 which inputs the key frame KF composed in motion picture I which is an object of coding from network or storage devices, a key frame storage unit 14 which stores key frames, a matching processor 16 which generates a corresponding point information MF by computing a matching between adjacent key frames based on the base technology or some other arbitrary technology, a form converter 300 which converts the corresponding information MF into image formatted data(simply referred to as a "map image $I_M$" hereinafter), a map image compression unit 302 which compresses the map image $I_M$ by image compression techniques, a key frame compression unit 40 which similarly compress the key frames read from the key frame storage unit 14 by image compression technique, and a stream generator 30 which generates a coded data stream CDS by combining data of the compressed key frames (simply referred to as a "compressed key frame CKF") and a compressed map image (simply referred to as a "compressed map $CI_M$").

In this structure, first, arbitrary motion pictures I is inputted from the image input unit 12, and among frames in the motion pictures, arbitrary frame, for example, such as the frame selected at predetermined interval in number, or the frame which has the large difference with a front frame, are selected as a key frame, and the selected key frame is once stored in the key frame storage unit 14. The key frame storage unit 14 performs as a buffer for processing.

The key frame KF read from the key frame storage unit 14 is sent to the matching processor 16 and the key frame compression unit 40. The matching processor 16 calculates matching and outputs the corresponding point information (map file) MF to the form converter 300. Aside from this, key frames are compressed by the known technique of JPEG (Joint Photographic Expert Group) and others in the key frame compression unit 40.

Fig. 20 shows typically the form of the corresponding point information MF outputted from the form converter 300. In this figure, each square area shows the pixel of the first key frame supplied to matching. It is written in each pixel in coordinate form that which pixel on the second key frame it corresponds to. In this example, the first pixel on the first key frame corresponds to the pixel of the coordinate $(x_0, y_0)$ on the second key frame.

Fig. 21 shows one form of the map image $I_M$ generated by the form converter 300. Here, the coordinates x and y of the pixel corresponding to each pixel in Fig. 20 are converted into the first image $I_{MX}$ and the second image $I_{MY}$, respectively. The first image $I_{MX}$ concerning x is expressed with the coordinates $x_i$ which is the corresponding pixel whose value pi of each pixel corresponds to each pixel of the base map image. That is, conversion which serves as $p_i=x_i$ (i= 0, 1, ...) is given. The second image $I_{MY}$ concerning y is similarly expressed with the coordinates $y_i$ which is the corresponding pixel whose value $p_i$ of each pixel corresponds to each pixel of the base map image. Namely, conversion which serves as $p_i=y_i$ (i= 0, 1, ...) is given. The form converter 300 combines the first and the second images, and outputs them as a compressed map $CI_M$.

Fig. 22 shows another form of the map image $I_M$ generated by the form converter 300. Here, as a value of each pixel in Fig. 20, the coordinates x of the correspondence pixel in the second key frame is multiplied by $2^n$, and then the value of coordinate y is added after that. Here n is the bit width of coordinates x and y. Therefore, the value of coordinates x and y is expressed as $pi=2^n x_i+y_i$ in $2^n$ bit data in just proportion, and one map image $I_M$ may be enough.

Fig. 23 is the example of composition of the coded data stream CDS generated by the stream generator 30. The stream generator 30 receives the compression key frame CKF and the compressed compression map $CI_M$. Then the stream generator 30 set the compression data $(CKF_0)$ of the first key frame, the compression data $(CKF_1)$ of the second key frame, the compression map $(CI_{M01})$ computed between them, the compression data $(CKF_2)$ of the 3rd key frame, the compression data $(CKF_3)$ of the 4th key frame, and the compression map $(CI_{M23})$ computed between them in sequence. Then, the stream generator 30 transmits the stream to the image decoding apparatus via a network, or records on a recording device. The whole compressibility increases since in addition to key frames but corresponding point information can be efficiently compressed irreversibly or lossy, as image form data.

Fig. 24 shows the structure of the image decoding apparatus 200 which receives the coding data stream CDS, decodes it and displays it as motion picture. The image decode unit 200 includes the image input unit 202 which inputs the coding data stream CDS, a stream analyzer 204 which analyzes the stream, and a key frame extension unit 206 which extents the compressed key frame CKF separated as a result of analysis, a map image extension unit 208 which extents the compressed map $CI_M$ similarly, and the form reverse converter 210 which receives the map image $I_M$ or its approximation data, and the corresponding point information MF as a result of extension, an intermediate image generation unit 212 which generates intermediate frames between key frames by interpolation calculation by base technology and some other technology, and the display unit 214 which displays the key frames and the generated intermediate frames on time series.

In this structure, the image input unit 202 receives the coding data stream CDS from a network or storages. The stream analyzer 204 analyzes this stream. Therefore, for example, the header, which is not illustrated in this figure, at the head of the coding data stream CDS in Fig. 23 may be prepared, and the data length of compressed key frames and compressed map may be recorded. As a result of analysis, the data of the compressed key frame CKF in the stream are sent to the key frame extension unit 206, and the compressed map $CI_M$ is sent to the map image extension unit 208.

The key frame extension unit 206 performs the extension based on JPEG, namely decoding. Naturally, the technique used in the decoding has been fixed with the image coder 10. Alternatively, the information is recorded on the header, and the key frame extension unit 206 reads and uses this.

On the other hand, in processing in the form reverse converter 210, the agreement is similarly made beforehand between the image coding unit 10 and the image decoding unit 200 about the technique for compressing the compression map $CI_M$, and the method for converting corresponding point information into image form, or the information is described to the above-mentioned header. The form reverse converter 210 can return the compressed map $CI_M$ to the original corresponding point information MF or its approximation information, according to an agreement or reading the header, by means of returning this to the form of coordinate data continuously by the technique based on JPEG in the compression map $CI_M$. The process in the intermediate image generator 212 is the same as that of the base technology.

Although the present invention has been described by way of exemplary embodiments, it should be understood that many changes and substitutions may be made by those skilled in the art without departing from the scope of the present invention which is defined only by the appended claims. Hereafter, such an example is given.

After the form converter 300 may deduct a predetermined offset value from the coordinate value included in corresponding point information, handle this value as a pixel value, and convert it into the image form data. For example, the offset value is to be the coordinate value of each pixel on the first image $I_{MX}$ in Fig. 20, the second image $I_{MY}$ in Fig. 21, or the image in Fig. 22 where the first and second images were unified. Namely, the form converter 300 serves conversion as $p_i = x_i - a_i$, where $a_i$ serves as an x-coordinate of pixel $p_i$ by the first image $I_{MX}$ about the above-mentioned $p_i$. This is a modification corresponding to Fig. 20. If a corresponding point is thought to be in the almost same position between two key frames, since this $p_i$ varies focusing on zero, the efficiency of variable-length coding, such as Huffman-coding, will be improved. About the second image $I_{MY}$, conversion $p_i = y_i - b_i$, may be performed where $b_i$ may be as coordinates y of pixel $p_i$. This is a modification corresponding to Fig. 21.

Similarly, the form converter 300 may give conversion which serves as $p_i = 2^n(x_i - a_i) + (y_i - b_i)$ using the above notation. This is a modification corresponding to Fig. 22. Naturally, the above transformation rules are notified also to the form reverse conversion unit 210, and required reverse conversion is realized.

In so far as the embodiments of the invention described above are implemented, at least in part, using software-controlled data processing apparatus, it will be appreciated that a computer programs providing such software control and a storage medium by which such computer program is stored are envisaged as aspect of the present invention.

**Claims**

1. An image coding method **characterized in that** comprises:

   converting corresponding point information between key frames into image form data; and
   compressing the image form data.

2. The method of Claim 1 **characterized in that** wherein the converting handles a coordinate value included in corresponding point information as a pixel value, and converts the coordinate value into the image form data.

3. The method of Claim 1 **characterized in that** further comprises generating the corresponding point information by performing a pixel-by-pixel matching between the key frames.

4. The method of Claim 2 **characterized in that** comprises generating the corresponding point information by performing a pixel-by-pixel matching between the key frames.

5. An image decoding method **characterized in that** comprises:

   decoding corresponding point information between key frames from compressed image form data; and
   generating intermediate frames between the key frames by interpolation based on the corresponding point information acquired by the decoding.

6. The method of Claim 5 **characterized in that** wherein the image form data is generated by handling the coordinate value included in the corresponding point information as a pixel value.

7. An image coding apparatus (10) **characterized in that** comprises:

   a form converter (300) which converts corresponding point information between key frames into image form data; and
   a compression unit (302) which compresses the image form data.

8. The apparatus (10) of Claim 7 **characterized in that** wherein the form converter (300) that handles the coordinate value included in corresponding point information as a pixel value, and converts the corresponding point information into the image form data.

9. The apparatus (10) of Claim 7 **characterized in that** wherein the form converter (300) separates two values, x and y, which are included in the coordinate value, and converts corresponding point information into two separate image form data which have the values, x and y, as pixel values, respectively, and wherein the compression unit (302) performs lossy compression of the two separate data individually.

10. The apparatus (10) of Claim 8 **characterized in that** wherein the form converter (300) separates two values, x and y, which are included in the coordinate value, and converts corresponding point information into two separate image form data which have the values, x and y, as pixel values, respectively, and wherein the compression unit (302) performs lossy compression of the two separate data individually.

11. The apparatus (10) of Claim 7 **characterized in that** wherein the form converter (300) connects two values, x and y, which are included in the coordinate value, and converts corresponding point information into data in a single image form whose pixel values are the connected values, and wherein the compression unit (302) performs lossy compression of the data in a single image form.

12. The apparatus (10) of Claim 8 **characterized in that** wherein the form converter (300) connects two values, x and y, which are included in the coordinate value, and converts corresponding point information into data in a single image form whose pixel values are the connected values, and wherein the compression unit (302) performs lossy compression of the data in a single image form.

13. The apparatus (10) of Claim 7 **characterized in that** further comprises a matching processor (16) which performs a pixel-by-pixel matching between key frames, and generates the corresponding point information.

14. The apparatus (10) of Claim 8 **characterized in that** further comprises a matching processor (16) which performs a pixel-by-pixel matching between key frames, and generates the corresponding point information.

15. The apparatus (10) of Claim 9 **characterized in that** further comprises a matching processor (16) which performs a pixel-by-pixel matching between key frames, and generates the corresponding point information.

16. The apparatus (10) of Claim 10 **characterized in that** further comprises a matching processor (16) which performs a pixel-by-pixel matching between key frames, and generates the corresponding point information.

17. The apparatus (10) of Claim 11 **characterized in that** further comprises a matching processor (16) which performs a pixel-by-pixel matching between key frames, and generates the corresponding point information.

18. The apparatus (10) of Claim 12 **characterized in that** further comprises a matching processor (16) which performs a pixel-by-pixel matching between key frames, and generates the corresponding point information.

19. An image decoding apparatus (200) **characterized in that** comprises:

   a decoder (208) which decodes corresponding point information between key frames from compressed image form data; and
   an intermediate frame generator (212) which generates intermediate frames from the key frames by interpolation on the basis of the corresponding point information which are acquired by the decoding.

20. The image coding apparatus (200) of Claim 19 **characterized in that** wherein the image form data is generated by handling the coordinate value, which is included in the corresponding point information, as a pixel value.

21. The image coding apparatus (10) of Claim 8 **characterized in that** wherein the form conversion unit (300) deducts a predetermined offset value from the coordinate value included in corresponding point information, handles this value as a pixel value, and converts the value into the image form data.

22. The image coding apparatus (10) of Claim 15 **characterized in that** wherein the predetermined offset value is included in the image form data.

23. A computer software having program code for carrying out a method according to claim 1.

24. A computer software having program code for carrying out a method according to claim 5.

Fig.1a  Fig.1b

Fig.1c  Fig.1d

Fig.1e  Fig.1f

Fig.1g  Fig.1h

Fig.1i  Fig.1j

Fig.2R

Fig.2A

Fig.2E

Fig.2B

Fig.2D

Fig.2C

Fig. 3

## X Graph

Fig.4

Fig.5a

Fig.5b

START

S1

MULTI-
RESOLUTIONAL
FILTERING

S2

IMAGE MATCHING

END

Fig. 6

START S1

S10

HIERARCHIZE
SOURCE IMAGE

S11

HIERARCHIZE
DESTINATION IMAGE

END S1

Fig. 7

Fig. 8

Fig. 9

$$p^{(3)}$$

$$p^{(2,0)} \qquad p^{(2,1)} \qquad p^{(2,2)} \qquad p^{(2,3)}$$

$$p^{(1,0)} \qquad p^{(1,1)} \qquad p^{(1,2)} \qquad p^{(1,3)}$$

$$p^{(0,0)} \qquad p^{(0,1)} \qquad p^{(0,2)} \qquad p^{(0,3)}$$

Fig. 10

START PREPARA-
TION FOR S2

S30

SET TWO OR MORE
EVALUATION EQUATIONS

S31

SET INTEGRAL
EVALUATION EQUATION

END PREPARA-
TION FOR S2

Fig.11

START S2

$\eta \leftarrow 0$
$m \leftarrow 0$ — S20

COMPUTE
$f^{(m,s)} (\eta = i\Delta\eta)$
AT M LEVEL — S21

$m \leftarrow m+1$ — S22

S23
N ← $m > n?$
Y

$\eta \leftarrow \eta + \Delta\eta$
$m \leftarrow 0$ — S24

S25
N ← $\eta > \eta_{max}?$
Y

DETERMINE
$\eta_{opt}$ AND $f^{(n)}$ — S26

END S2

Fig.12

$p(0, s)$       $q(0, s)$

# Fig.13

# Fig.14

START S21

$s \leftarrow 0$
$\lambda \leftarrow 0$ — S210

S211
COMPUTE
$f^{(m,s)}$ $(\lambda = i\Delta\lambda)$

$\lambda \leftarrow \lambda + \Delta\lambda$ — S212

N — $\lambda > \lambda_{max}$? — S213

Y

DETERMINE
$\lambda_{opt}$ AND $f^{(m,s)}$ — S214

$\lambda \leftarrow 0$
$s \leftarrow s+1$ — S215

S16

N — $s > 4$?

Y

END S21

Fig.15

Fig.16

Fig.17

**Fig. 18**

I

| IMAGE INPUT UNIT | ~12 |

KF

KEY FRAME STORAGE UNIT ~14

KF

| MATCHING PROCESSOR | ~16 |

MF

| FORM CONVERTER | ~300 |

I$_M$

KF

40~ | KEY FRAME COMPRESSION UNIT |

| MAP IMAGE COMPRESSION UNIT | ~302 |

CKF

CI$_M$

| STREAM GENERATOR | ~30 |

CDS

NETWORK STORAGE DEVICE

10 : IMAGE CODING APPARATUS

## Fig.19

| $(x_0, y_0)$ | $(x_1, y_1)$ | $(x_2, y_2)$ | $\cdots$ | |
|---|---|---|---|---|
| | | | | |
| | | | | |

MF

**Fig.20**

| $p_0 = x_0$ | $p_1 = x_1$ | $p_2 = x_2$ | $\cdots$ | |
|---|---|---|---|---|
| | | | | |
| | | | | |

$I_{MX}$

$I_M$

| $p_0 = y_0$ | $p_1 = y_1$ | $p_2 = y_2$ | $\cdots$ | |
|---|---|---|---|---|
| | | | | |
| | | | | |

$I_{MY}$

**Fig.21**

| $p_0 = 2^n x_0 + y_0$ | $p_1 = 2^n x_1 + y_1$ | $p_2 = 2^n x_2 + y_2$ | $\cdots$ | |
|---|---|---|---|---|
| | | | | |
| | | | | |

$I_M$

**Fig.22**

| $CKF_0$ | $CKF_1$ | $CI_{M01}$ | $CKF_2$ | $CKF_3$ | $CI_{M23}$ | |
|---|---|---|---|---|---|---|

CDS

**Fig.23**

CDS

↓

| IMAGE INPUT UNIT |
~202

↓

| STREAM ANALYZER |
~204

↓

CKF ↓                    ↓ CI$_M$

| KEY FRAME EXTENSION UNIT |
206~

| MAP IMAGE EXTENSION UNIT |
~208

I$_M$ ↓

| FORM REVERSE CONVERTER |
~210

KF ↓                    ↓ MF

| INTERMEDIATE IMAGE GENERATOR |
~212

↓

| DISPLAY UNIT |
~214

200 : IMAGE DECODING APPARATUS

# Fig.24